# EUROPEAN PATENT APPLICATION

(11) **EP 4 617 842 A1**
(43) Date of publication of application: **17.09.2025**
(21) Application number: 24744856.6
(22) Date of filing: 16.01.2024
(51) Int. Cl.: G06F 3/04842, G06F 3/0481, G06F 1/16

(54) **WEARABLE DEVICE FOR PROVIDING INFORMATION, AND METHOD THEREFOR**

(30) Priority: 18.01.2023 KR 20230007603; 07.02.2023 KR 20230016406
(71) Applicant: Samsung Electronics Co., Ltd., Suwon-si, Gyeonggi-do 16677 (KR)
(72) Inventor: LEE, Yongkoo, Suwon-si, Gyeonggi-do 16677 (KR); KIM, Sooryuh, Suwon-si, Gyeonggi-do 16677 (KR); OH, Saeah, Suwon-si, Gyeonggi-do 16677 (KR)
(74) Representative: Appleyard Lees IP LLP
(86) International application number: PCT/KR2024/000789
(87) International publication number: WO 2024/155076

(57) **Abstract**

A processor of a wearable device, according to one embodiment, can execute a first application linked to a first virtual space, and a second application linked to a second virtual space. The processor can: confirm occurrence of a notification message related to the second application, while displaying a part of the first virtual space on a display; determine, on the basis of the occurrence of the notification message, a location in which the notification message is to be displayed within another part of the first virtual space, differing from the part thereof; and display, on the display, on the basis of the rotation of the wearable device detected using the sensor, the other part of the first virtual space including the notification message linked to the location.

## Description

### [Technical Field]

Various embodiments of the present disclosure relate to a wearable device for providing information and a method thereof.

### [Background Art]

In order to provide an enhanced user experience, an electronic device that provides an augmented reality (AR) service that displays information generated by a computer in conjunction with an external object in a real-world are being developed. The electronic device may be a wearable device that may be worn by a user. For example, the electronic device may be AR glasses and/or a head-mounted device (HMD).

### [Disclosure]

### [Technical Solution]

According to an embodiment, a wearable device may comprise a display, a sensor, memory comprising one or more storage media storing instructions, and at least one processor. The instructions, when executed by the at least one processor individually or collectively, may cause the wearable device to execute a first application associated with a first virtual space and a second application associated with a second virtual space. The instructions, when executed by the at least one processor individually or collectively, may cause the wearable device to, while displaying a portion of the first virtual space in the display, check occurrence of a notification message associated with the second application. The instructions, when executed by the at least one processor individually or collectively, may cause the wearable device to, based on the occurrence of the notification message, determine a location to display the notification message in another portion of the first virtual space different from the portion. The instructions, when executed by the at least one processor individually or collectively, may cause the wearable device to, based on rotation of the wearable device detected by using the sensor, display the another portion of the first virtual space including the notification message associated with the location in the display.

In an embodiment, a method of a wearable device may be provided. The method may comprise executing a first application associated with a first virtual space and a second application associated with a second virtual space. The method may comprise, while displaying a portion of the first virtual space in the display, checking occurrence of a notification message associated with the second application. The method may comprise, based on the occurrence of the notification message, determining a location to display the notification message in another portion of the first virtual space different from the portion. The method may comprise, based on rotation of the wearable device detected by using the sensor, displaying the another portion of the first virtual space including the notification message associated with the location in the display.

According to an embodiment, a wearable device may comprise a display, memory storing instructions, and a processor. The instructions, when executed by the processor, may cause the wearable device to display a portion of a virtual space in the display. The instructions, when executed by the processor, may cause the wearable device to, while displaying the portion of the virtual space, based on occurrence of a notification message, identify a priority of the notification message, by using at least one of an application providing the notification message, an electronic device, or one or more applications linked with the virtual space. The instructions, when executed by the processor, may cause the wearable device to, based on identifying the notification message corresponding to a first priority, display the notification message at a location spaced apart from a central axis of the display by a first angle. The instructions, when executed by the processor, may cause the wearable device to, based on identifying the notification message corresponding to a second priority, display the notification message at a location spaced apart from the central axis by a second angle greater than the first angle.

According to an embodiment, a method of a wearable device may comprise displaying a portion of a virtual space in the display of the wearable device. The method may comprise, while displaying the portion of the virtual space, based on occurrence of a notification message, identifying a priority of the notification message, by using at least one of an application providing the notification message, an electronic device, or one or more applications linked with the virtual space. The method may comprise, based on identifying the notification message corresponding to a first priority, displaying the notification message at a location spaced apart from a central axis of the display by a first angle. The method may comprise, based on identifying the notification message corresponding to a second priority, displaying the notification message at a location spaced apart from the central axis by a second angle greater than the first angle.

According to an embodiment, a wearable device may comprise a display, memory storing instructions, and a processor. The instructions, when executed by the processor, may cause the wearable device to, in a first state displaying a portion of a first virtual space in the display, display a notification message provided from an application corresponding to the first virtual space at a first area. The instructions, when executed by the processor, may cause the wearable device to, based on identifying an input for a switch of a virtual space, switch from the first state to a second state displaying a portion of a second virtual space different from the first virtual space. The instructions, when executed by the processor, may cause the wearable device to, based on switching to the second state, display the notification message at a second area distinguished from the first area in the display.

According to an embodiment, a method of a wearable device may comprise, in a first state displaying a portion of a first virtual space in a display of the wearable device, displaying a notification message provided from an application corresponding to the first virtual space at a first area. The method may comprise, based on identifying an input for a switch of a virtual space, switching from the first state to a second state displaying a portion of a second virtual space different from the first virtual space. The method may comprise, based on switching to the second state, displaying the notification message at a second area distinguished from the first area in the display.

### [Description of the Drawings]

FIG. 1 illustrates an example of an operation of displaying a screen by a wearable device according to an embodiment.
FIG. 2 illustrates an example of a block diagram of a wearable device according to an embodiment.
FIGS. 3A, 3B, and 3C illustrate an example of an operation in which a wearable device displays one or more virtual spaces according to an embodiment.
FIGS. 4A to 4B illustrate an example of an operation in which a wearable device displays a notification message according to an embodiment.
FIGS. 5A to 5B illustrate an example of an operation in which a wearable device displays a notification message according to an embodiment.
FIG. 6 illustrates an example of a flowchart of a wearable device according to an embodiment.
FIG. 7 illustrates an example of a flowchart of a wearable device according to an embodiment.
FIG. 8 illustrates an example of a flowchart of a wearable device according to an embodiment.
FIG. 9 illustrates an example of a flowchart of a wearable device according to an embodiment.
FIG. 10A illustrates an example of a perspective view of a wearable device according to an embodiment.
FIG. 10B illustrates an example of one or more hardware disposed in a wearable device according to an embodiment.
FIGS. 11A to 11B illustrate an example of an exterior of a wearable device according to an embodiment.

### [Mode for Invention]

Hereinafter, various embodiments of the present document will be described with reference to the accompanying drawings.

The various embodiments of the present document and terms used herein are not intended to limit the technology described in the present document to specific embodiments, and should be understood to include various modifications, equivalents, or substitutes of the corresponding embodiment. In relation to the description of the drawings, a reference numeral may be used for a similar component. A singular expression may include a plural expression unless it is clearly meant differently in the context. In the present document, an expression such as "A or B", "at least one of A and/or B", "A, B or C", or "at least one of A, B and/or C", and the like may include all possible combinations of items listed together. Expressions such as "1st", "2nd", "first" or "second", and the like may modify the corresponding components regardless of order or importance, is only used to distinguish one component from another component, but does not limit the corresponding components. When a (e.g., first) component is referred to as "connected (functionally or communicatively)" or "accessed" to another (e.g., second) component, the component may be directly connected to the other component or may be connected through another component (e.g., a third component).

The term "module" used in the present document may include a unit configured with hardware, software, or firmware, and may be used interchangeably with terms such as logic, logic block, component, or circuit, and the like. The module may be an integrally configured component or a minimum unit or part thereof that performs one or more functions. For example, a module may be configured with an application-specific integrated circuit (ASIC).

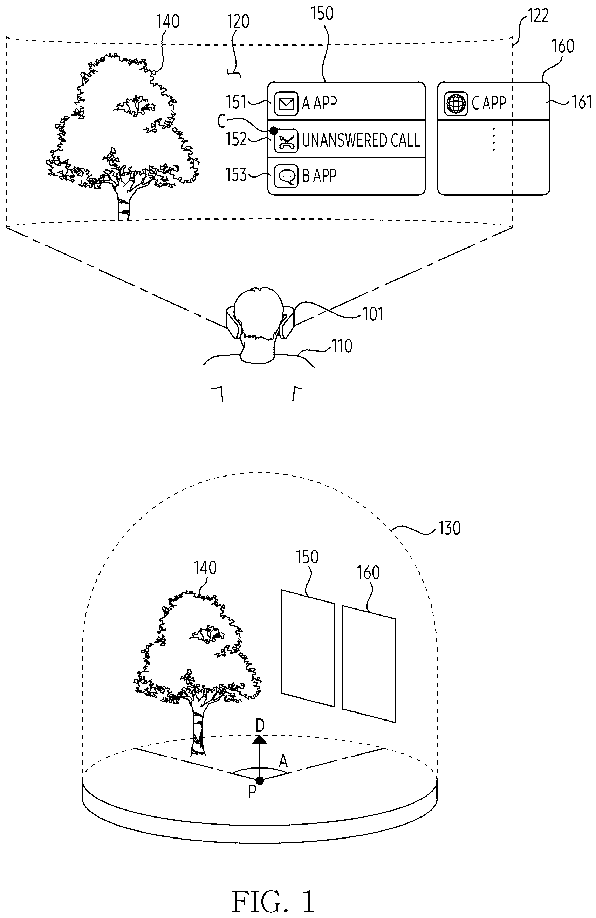

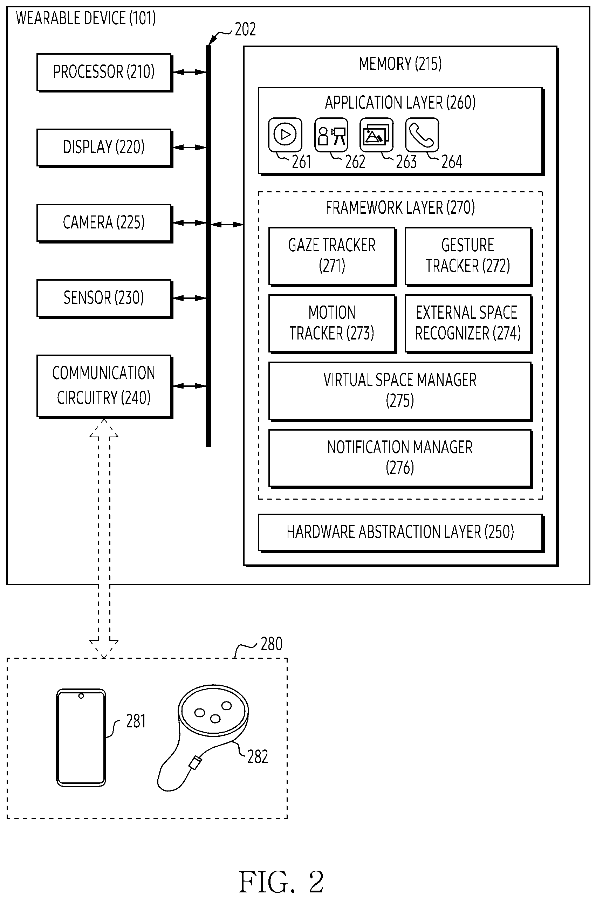

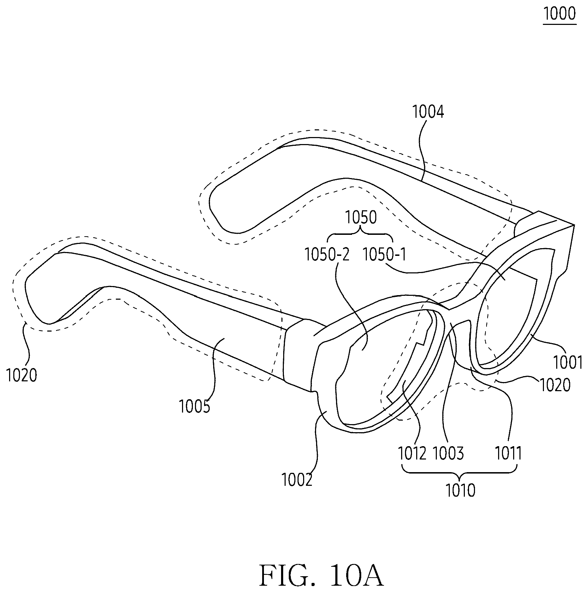

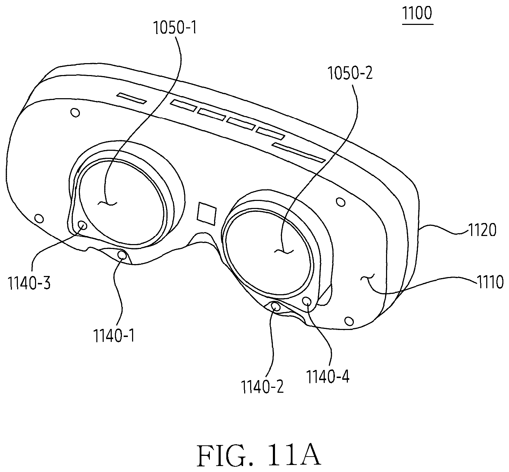

FIG. 1 illustrates an example of an operation of displaying a screen 120 by a wearable device 101 according to an embodiment. In an embodiment, the wearable device 101 may include a head-mounted display (HMD) wearable on a head of a user 110. Although an external appearance of the wearable device 101 having a shape of glasses is illustrated, an embodiment is not limited thereto. An example of one or more hardware included in the wearable device 101 will be exemplarily described with reference to FIG. 2. An example of a structure of the wearable device 101 wearable on the head of the user 110 will be described with reference to FIGS. 10A to 10B and/or 11A to 11B. The wearable device 101 may be referred to as an electronic device. For example, the electronic device may be utilized as the HMD by being combined with an accessory to be attached to the head of the user.

According to an embodiment, the wearable device 101 may execute a function associated with a video see-through (VST) and/or a virtual reality (VR). Referring to FIG. 1, in a state in which the user 110 wears the wearable device 101, the wearable device 101 may include a housing covering the eyes of the user 110. The wearable device 101 may include a display positioned on a first surface of the housing facing the eyes in the state. The wearable device 101 may include a camera positioned on a second surface opposite to the first surface. By using the camera, the wearable device 101 may obtain an image and/or a video including ambient light. The wearable device 101 may cause the user 110 to recognize the ambient light through the display, by outputting the frames in the display positioned on the first surface. A display area of the display positioned on the first surface may be formed by one or more pixels included in the display. The wearable device 101 may cause the user 110 to recognize the virtual object together with the real object recognized by the ambient light, by synthesizing the virtual object in the frames outputted through the display.

According to an embodiment, the wearable device 101 may execute a function associated with an augmented reality (AR) and/or a mixed reality (MR). As shown in FIG. 1, in a state in which the user 110 wears the wearable device 101, the wearable device 101 may include at least one lens disposed adjacent to the eyes of the user 110. The wearable device 101 may couple the ambient light passing through the lens with light emitted from the display of the wearable device 101. The display area of the display may be formed in the lens through which the ambient light passes through. Since the wearable device 101 couples the ambient light and the light emitted from the display, the user 110 may see an image in which a real object recognized by the ambient light and a virtual object formed by the light emitted from the display are mixed.

Referring to FIG. 1, an example of a screen 120 is illustrated in the display. While the user 110 wears the wearable device 101, the screen 120 may at least partially overlap a field of view of the user 110, or may be included in the field of view. The wearable device 101 may display a user interface (UI) having a sense of perspective on the screen 120, by using a binocular disparity. The wearable device 101 may project light representing the UI disposed at different locations to each of two eyes of the user 110 wearing the wearable device 101 based on the binocular disparity. An increase in the binocular disparity may mean an increase in a difference between the locations visible in each of the two eyes. As the binocular disparity of the UI displayed by the wearable device 101 increases, the user 110 may recognize the UI approaching the eyes. The UI displayed by the wearable device 101 may include a window (e.g., activity) and/or a widget (or a gadget) provided from a program (e.g., a software application) executed by the wearable device 101, and/or a visual object included in the window.

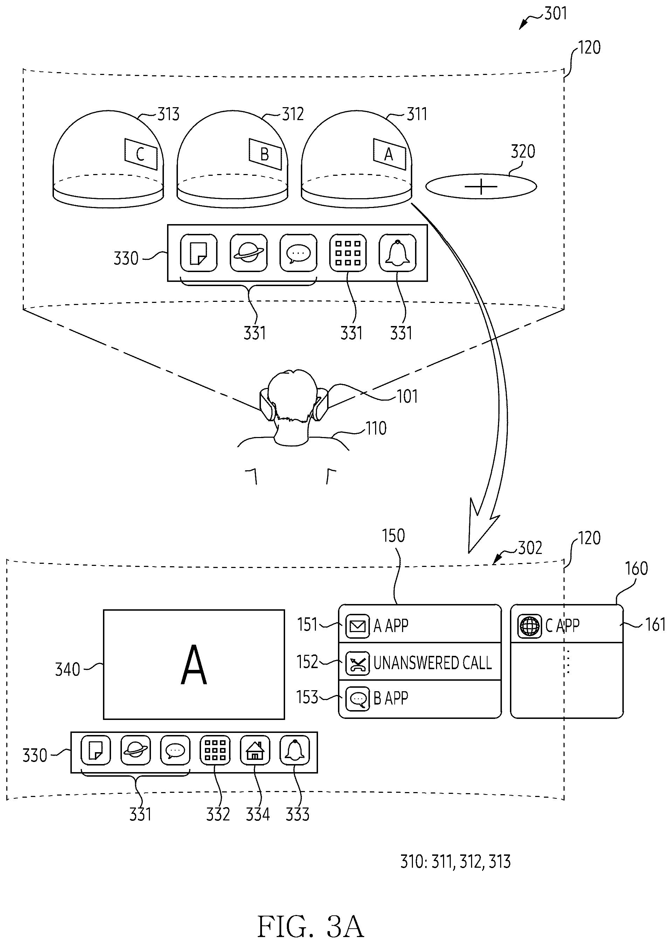

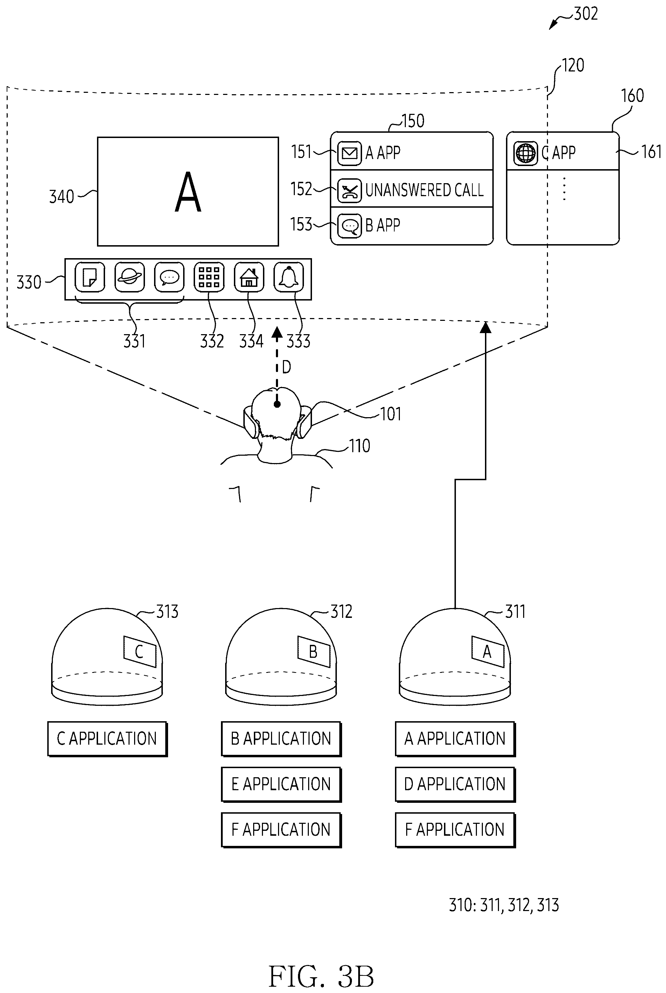

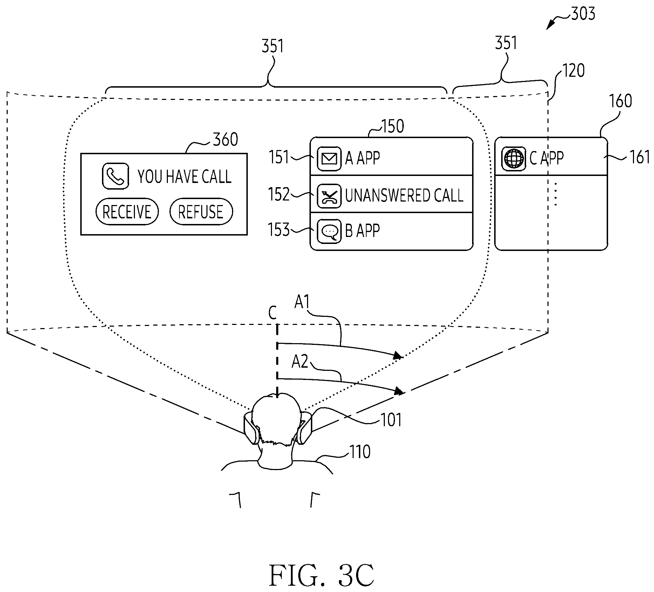

Referring to FIG. 1, according to an embodiment, the wearable device 101 may manage a virtual space 130. The virtual space 130 may be managed by the wearable device 101 to provide a user experience based on the VR. For example, the virtual space 130 may be formed to accommodate one or more applications by wearable device 101. For example, the virtual space 130 may be provided from a specific application (e.g., an immersive application) installed by the wearable device 101. Although the single virtual space 130 is illustrated, the wearable device 101 may manage a plurality of virtual spaces including the virtual space 130. An example of a UI displayed by the wearable device 101 to manage the plurality of virtual spaces will be described with reference to FIGS. 3A, 3B, and 3C.

Referring to FIG. 1, the wearable device 101 may display a portion of the virtual space 130 in the display. The portion of the virtual space 130 displayed through the display in the three-dimensional virtual space 130 may be selected by the wearable device 101 executing the software application to provide the virtual space 130. The portion of the virtual space 130 selected in the virtual space 130 may be determined by a size (e.g., a width and/or a height) of at least a portion of the display set to display the virtual space 130, and one or more parameters (e.g., magnification, brightness, a distance and/or a depth) used to select the portion. For example, the portion of the virtual space 130 may correspond to an angle range of a preset size in an angle range of 360 ° having the user 110 wearing the wearable device 101 as a center. For example, the wearable device 101 may display an image and/or video of the virtual space 130 rendered based on a point P on the screen 120. Referring to FIG. 1, an exemplary state in which the wearable device 101 displays the portion of the virtual space 130 corresponding to a direction D extending from the point P is illustrated. The wearable device 101 may display the portion of the virtual space 130 included in a range of an angle A with respect to the direction D. The wearable device 101 may move the point P in the virtual space 130 based on movement (e.g., movement of the user 110 wearing the wearable device 101) of the wearable device 101. The wearable device 101 may change the direction D in the virtual space 130 based on rotation (e.g., rotation of the head of the user 110 wearing the wearable device 101) of the wearable device 101. The wearable device 101 may change the angle A in the virtual space 130 based on the size of the display of the wearable device 101.

In the exemplary case of FIG. 1, the wearable device 101 may display a screen 120 including the portion of the virtual space 130 based on a view angle (or a field-of-view (FoV)) formed in the virtual space 130 by the point P, the direction D, and the angle A. A virtual object 140 included in the view angle may be included in the screen 120 displayed in the display of the wearable device 101. Based on displaying the portion of the virtual space 130, the wearable device 101 may provide a user experience of entering the virtual space 130 to the user 110 wearing the wearable device 101. Hereinafter, that the user 110 enters the virtual space 130 may mean that the wearable device 101 displays the portion of the virtual space 130 based on the point P in the virtual space 130.

According to an embodiment, the wearable device 101 may identify occurrence of a notification message while displaying the portion of the virtual space 130. For example, the notification message may occur by any one of a plurality of applications executed by the wearable device 101 based on multitasking. For example, the notification message may be transmitted from an external electronic device (e.g., a push server and/or a user terminal such as a mobile phone) connected to the wearable device 101 to the wearable device 101. For example, the notification message may include a push alarm provided from the push server. According to an embodiment, the wearable device 101 may display the notification message on the screen 120 including at least the portion of the virtual space.

According to an embodiment, the wearable device 101 may classify the notification message into preset priorities. The preset priorities used for classification of the notification message may be used to distinguish a location and/or an area in which the notification message is to be displayed. In an embodiment, the wearable device 101 may form a plurality of areas to display the notification message along a direction away from a center C of the screen 120. Referring to FIG. 1, the wearable device 101 may form the plurality of areas to display the notification message on each of panels 150 and 160 that are an example of the virtual object. In the wearable device 101, a distance between the center C of the screen 120 and the panel 150 may be smaller than a distance between the center C of the screen 120 and the panel 160. In an embodiment in which the wearable device 101 classifies the notification message into two priorities, the panel 150 disposed relatively close to the center C of the screen 120 may be used for a display of the notification message of a first priority, and the panel 160 may be used for a display of the notification message of a second priority inferior to the first priority. The panels 150 and 160 may be referred to as a notification panel.

According to an embodiment, the wearable device 101 may identify the priority of the notification message by using at least one of an application providing the notification message, an electronic device, or one or more applications linked to the virtual space. The wearable device 101 may display the notification message at an area (e.g., any one of areas formed by each of the panels 150 and 160) corresponding to the identified priority. Referring to FIG. 1, different notification messages 151, 152, 153, and 161 displayed on each of the panels 150 and 160 by the wearable device 101 are exemplarily illustrated. Hereinafter, an example of an operation in which the wearable device 101 displays the notification message based on the priority will be described with reference to the notification messages 151, 152, 153, and 161.

For example, the wearable device 101 may determine the priority of the notification message based on whether the application providing the notification message corresponds to the virtual space 130 displayed through the screen 120. Referring to FIG. 1, the wearable device 101 identifying the notification message 151 occurred by the application linked to the virtual space 130 may display the notification message 151 on the panel 150. For example, the wearable device 101 may determine the priority of the notification message based on whether the application providing the notification message was included in a preset list (e.g., a white list stored in the wearable device 101 to display the notification message first). Referring to FIG. 1, the wearable device 101 identifying the notification message 152 occurred by an application (e.g., an application for a call connection) included in the preset list may display the notification message 152 on the panel 150.

For example, the wearable device 101 identifying the notification message 153 occurred by the application corresponding to the virtual space 130 may display the notification message 153 on the panel 150. The wearable device 101 identifying the notification message 161 occurred by an application corresponding to another virtual space different from the virtual space 130 may display the notification message 161 on the panel 160 disposed farther away from the center C of the screen 120 than the panel 150. The wearable device 101 may accumulate a notification message having a relatively low priority to the panel 160 displayed farther away from the center C of the screen 120 than the panel 150. The wearable device 101 may accumulate a notification message having a relatively high priority on the panel 150 relatively close to the center C of the screen 120. Referring to FIG. 1, the notification messages 151, 152, and 153 may be displayed from the top of the panel 150 in the latest order of the time when the notification message occurred. For example, the notification message 153 may have occurred earlier than other notification messages 151 and 152.

As described above, according to an embodiment, the wearable device 101 may classify the notification message according to the priority, by using areas (e.g., the areas divided into the panels 150 and 160) having different distances from the center C of the screen 120. For example, based on identifying a notification message classified as the first priority, the wearable device 101 may display the notification message on the panel 150 with a relatively small distance from the center C of the screen 120. For example, based on identifying a notification message classified as the second priority inferior to the first priority, the wearable device 101 may display the notification message on the panel 160 that is relatively far from the center C of the screen 120.

Referring to FIG. 1, the wearable device 101 may display the panel 150 to display the notification message of the first priority in a boundary line 122 of the screen 120. Referring to FIG. 1, an exemplary shape of the boundary line 122 based on a dashed line is displayed, but an embodiment is not limited thereto. In an embodiment in which the panel 160 is disposed farther away from the center C of the screen 120 than the panel 150, the panel 160 may be displayed at a location where the boundary line 122 crosses. For example, at least a portion of panel 160 may be rendered and/or disposed outside the screen 120. Since the panel 160 is at least partially disposed outside the screen 120, an amount of information displayed to the user 110 may be less than an amount of information displayed to the user 110 through the panel 150. The wearable device 101 may cause the user 110 to focus on relatively important information (e.g., the notification message displayed through the panel 150), by displaying the notification message of a posterior (e.g., the second priority) on the panel 160 corresponding to the notification message of the second priority.

Although the panels 150 and 160 disposed in a horizontal direction from the center C of the screen 120 are exemplarily illustrated, an embodiment is not limited thereto. For example, the wearable device 101 may display the panels 150 and 160 along a vertical direction at the center C of the screen 120. In the example, the wearable device 101 may render at least a portion of the panel 160 below a bottom of the screen 120. In order to view the at least portion of the panel 160, it may be required to rotate the head downward. The embodiment is not limited thereto, and the wearable device 101 may adaptively change the locations and/or sizes of the panels 150 and 160 based on a head movement pattern of the user 110.

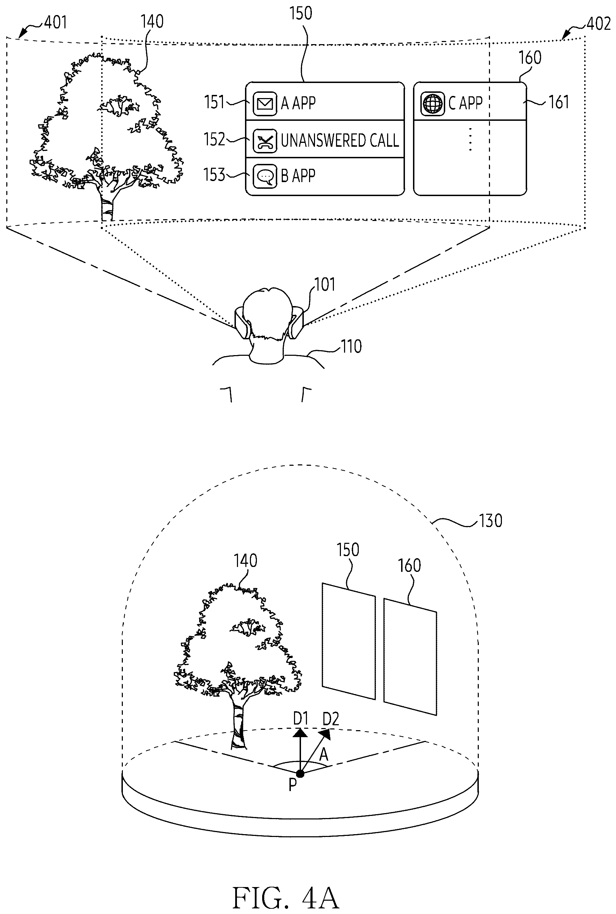

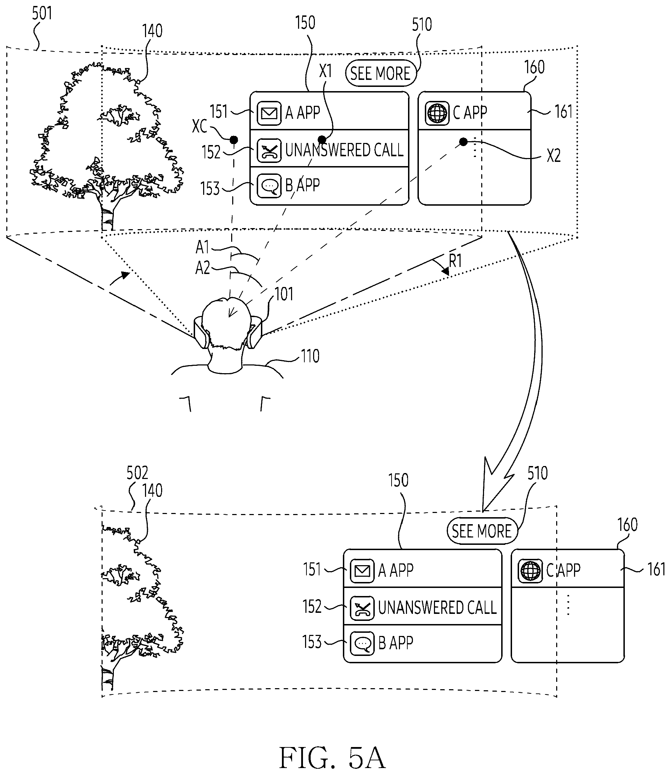

As described above, according to an embodiment, the wearable device 101 may classify the notification message based on the plurality of virtual spaces such as the virtual space 130. An exemplary operation in which the wearable device 101 classifies the notification message based on the plurality of virtual spaces will be described with reference to FIGS. 3A, 3B, and 3C. The wearable device 101 may assign a priority to the notification message, by classifying the notification message. The wearable device 101 may display the notification message at an area formed at different locations on the screen 120, such as the panels 150 and 160, based on the priority. For example, the notification message having the relatively high priority may be displayed on the panel 150 displayed inside the screen 120. For example, the notification message having the relatively low priority may be displayed on the panel 160 at least partially displayed outside the screen 120. An operation in which the wearable device 101 displays the panels 150 and 160 according to a motion of the user 110 will be described with reference to FIGS. 4A to 4B and 5A to 5B. By dividing and displaying the notification message into different panels 150 and 160, the wearable device 101 may cause the user 110 to preferentially recognize the relatively important notification message.

Hereinafter, referring to FIG. 2, one or more hardware and/or one or more software applications included in the wearable device 101 according to an embodiment will be described.

FIG. 2 illustrates an example of a block diagram of a wearable device 101 according to an embodiment. The wearable device 101 of FIG. 2 may include the wearable device 101 of FIG. 1. According to an embodiment, the wearable device 101 may include at least one of a processor 210, memory 215, a display 220, a camera 225, a sensor 230, or communication circuitry 240. The processor 210, the memory 215, the display 220, the camera 225, the sensor 230, and the communication circuitry 240 may be electronically and/or operably coupled with each other by an electronical component such as a communication bus 202. Hereinafter, hardware being operably coupled may mean that a direct connection or an indirect connection between hardware is established by wire or wirelessly so that second hardware is controlled by first hardware among the hardware. Although illustrated based on different blocks, an embodiment is not limited thereto, and a portion (e.g., at least a portion of the processor 210, the memory 215, and the communication circuitry 240) of the hardware of FIG. 2 may be included in a single integrated circuit such as a system on a chip (SoC). A type and/or the number of the hardware included in the wearable device 101 is not limited as illustrated in FIG. 2. For example, the wearable device 101 may include only a portion of hardware illustrated in FIG. 2.

In an embodiment, the processor 210 of the wearable device 101 may include hardware to process data based on one or more instructions. For example, the hardware to process the data may include an arithmetic and logic unit (ALU), a floating point unit (FPU), a field programmable gate array (FPGA), a central processing unit (CPU), and/or an application processor (AP). The processor 210 may have a structure of a single-core processor, or have a structure of a multi-core processor such as a dual core, a quad core, or a hexa core.

In an embodiment, the memory 215 of the wearable device 101 may include a hardware component to store data and/or instruction inputted to and/or outputted from the processor 210 of the wearable device 101. For example, the memory 215 may include volatile memory such as random-access memory (RAM), and/or non-volatile memory such as read-only memory (ROM). For example, the volatile memory may include at least one of dynamic RAM (DRAM), static RAM (SRAM), Cache RAM, and pseudo SRAM (PSRAM). For example, the non-volatile memory may include at least one of programmable ROM (PROM), erasable PROM (EPROM), electrically erasable PROM (EEPROM), flash memory, a hard disk, a compact disk, a solid state drive (SSD), and an embedded multi media card (eMMC).

In an embodiment, the display 220 of the wearable device 101 may output visualized information (e.g., a screen of FIGS. 1, 3A, 3B, 3C, 4A to 4B, and 5A to 5) to a user (e.g., the user 110 of FIG. 1). For example, the display 220 may output the visualized information to the user, by being controlled by the processor 210 including circuitry such as a graphic processing unit (GPU). The display 220 may include a flat panel display (FPD), and/or electronic paper. The FPD may include a liquid crystal display (LCD), a plasma display panel (PDP), and/or one or more light emitting diodes (LEDs). The LED may include an organic LED (OLED). The display 220 of FIG. 2 may include at least one display 1050, and 1150 to be described later with reference to FIGS. 10A to 10B and/or FIGS. 11A to 11B.

In an embodiment, the camera 225 of the wearable device 101 may include one or more optical sensors (e.g., a charged coupled device (CCD) sensor and a complementary metal oxide semiconductor (CMOS) sensor) generating an electrical signal indicating a color and/or brightness of light. A plurality of optical sensors included in the camera 225 may be disposed in a shape of a 2 dimensional array. The camera 225 may generate 2 dimensional frame data corresponding to light reaching the optical sensors of the 2 dimensional array by substantially simultaneously obtaining electrical signals of each of the plurality of optical sensors. For example, photo data captured by using the camera 225 may mean a 2 dimensional frame data obtained from the camera 225. For example, video data captured by using the camera 225 may mean a sequence of a plurality of 2 dimensional frame data obtained from the camera 225 according to a frame rate. The camera 225 may be disposed toward a direction in which the camera 225 receives the light, and may further include flash light to output the light toward the direction. The number of the cameras 225 included in the wearable device 101 is not limited to the block of FIG. 2, and may include a plurality of cameras.

According to an embodiment, the sensor 230 of the wearable device 101 may generate electronic information that may be processed by the processor 210 and/or the memory 215 of the wearable device 101 from non-electronic information associated with the wearable device 101. The information may be referred to as sensor data. The sensor 230 may include a global positioning system (GPS) sensor to detect a geographic location of the wearable device 101, an image sensor, an illumination sensor and/or a time-of-flight (ToF) sensor, and an inertial measurement unit (IMU) to detect a physical motion of the wearable device 101. The wearable device 101 may measure the physical motion of the wearable device 101 based on 6 degrees of freedom (DoF) (e.g., an x-axis, a y-axis, a z-axis, roll, pitch, and yaw), by using the data of the IMU.

In an embodiment, the communication circuitry 240 of the wearable device 101 may include a hardware component to support transmission and/or reception of the electrical signal between the wearable device 101 and an external electronic device 280. For example, the communication circuitry 240 may include at least one of a modem (MODEM), an antenna, and an optical/electronic (O/E) converter. The communication circuitry 240 may support the transmission and/or the reception of the electrical signal based on various types of protocols such as Ethernet, a local area network (LAN), a wide area network (WAN), wireless fidelity (WiFi), Bluetooth, Bluetooth low energy (BLE), ZigBee, long term evolution (LTE), 5G new radio (NR), and/or 6G. Referring to FIG. 2, as an example of the external electronic device 280 connectable through the communication circuitry 240 of the wearable device 101, a remote controller 282 to control a user terminal 281 (e.g., a mobile phone) and/or the wearable device 101 is illustrated. The embodiment is not limited thereto.

Although not illustrated, according to an embodiment, the wearable device 101 may include an output means to output information in a different shape other than a visualized shape. For example, the wearable device 101 may include a speaker to output an acoustic signal. For example, the wearable device 101 may include a motor to provide haptic feedback based on vibration.

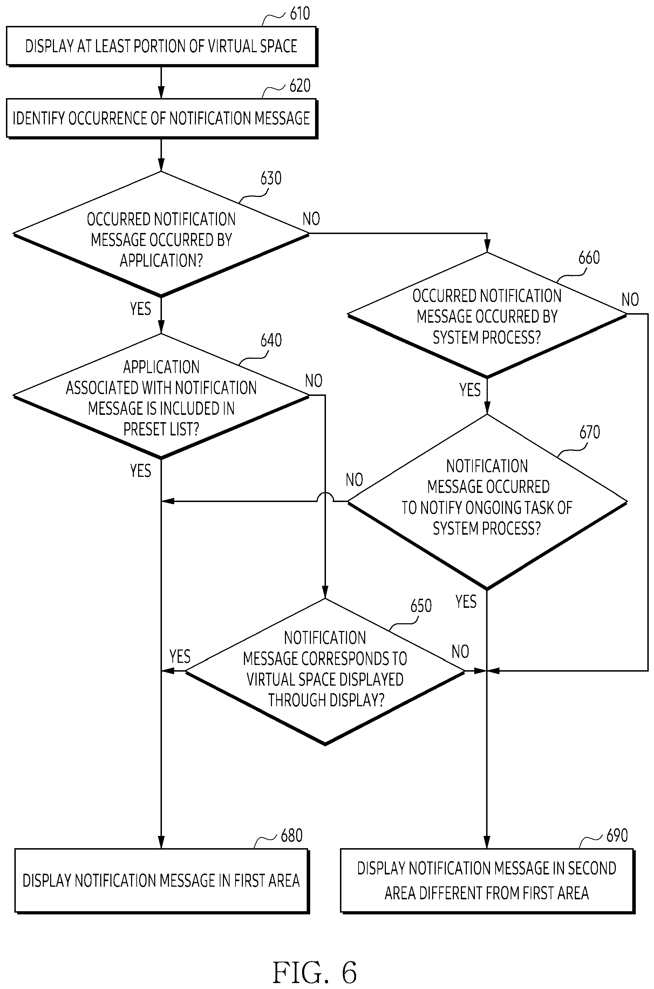

Referring to an embodiment of FIG. 2, in the memory 215 of the wearable device 101, one or more instructions (or commands) indicating a calculation and/or an operation to be performed by the processor 210 of the wearable device 101 on data may be stored. A set of one or more instructions may be referred to as a program, firmware, an operating system, a process, a routine, a sub-routine, and/or an application. Hereinafter, an application being installed in an electronic device (e.g., the wearable device 101) may mean that one or more instructions provided in a shape of the application are stored in the memory 215, and the one or more applications are stored in a format (e.g., a file having an extension preset by the operating system of the wearable device 101) that is executable by a processor of the electronic device. According to an embodiment, the wearable device 101 may perform an operation of FIGS. 6 to 9, by executing the one or more instructions stored in the memory 215.

Referring to FIG. 2, programs installed in the wearable device 101 may be classified as any one layer of different layers including an application layer 260, a framework layer 270, and/or a hardware abstraction layer (HAL) 250 based on a target. For example, in the hardware abstraction layer 250, programs (e.g., a driver) designed to target hardware (e.g., the display 220, the camera 225, the sensor 230 and/or the communication circuitry 240) of the wearable device 101 may be classified. For example, in the framework layer 270, programs (e.g., a gaze tracker 271, a gesture tracker 272, a motion tracker 273, an external space recognizer 274, a virtual space manager 275 and/or a notification manager 276) designed to target at least one of the hardware abstraction layer 250 and/or the application layer 260 may be classified. Programs classified as the framework layer 270 may provide an executable application programming interface (API) based on another program.

Referring to FIG. 2, in the application layer 260, a program designed to target a user (e.g., the user 110 of FIG. 1) controlling the wearable device 101 may be classified. For example, the program classified as the application layer 260 may include at least one of an application 261 for video playback and/or streaming, an application 262 for video conferencing, an application 263 to view media content (e.g., an image and/or a videos) of the memory 215, or an application 264 for a call connection. An embodiment is not limited thereto. For example, the program classified as the application layer 260 may cause execution of a function supported by programs classified as the framework layer 270, by calling the API.

Referring to FIG. 2, the wearable device 101 may process information associated with a gaze of a user wearing the wearable device 101, based on execution of the gaze tracker 271 in the framework layer 270. For example, the wearable device 101 may obtain an image including eyes of the user from a camera disposed toward the eyes of the user wearing the wearable device 101. Based on a location and/or a direction of a pupil included in the image, the wearable device 101 may identify a direction of the gaze of the user.

Referring to FIG. 2, the wearable device 101 may identify a motion of a preset body part including a hand, based on execution of the gesture tracker 272 in the framework layer 270. For example, the wearable device 101 may obtain an image and/or a video including the body part from a camera disposed toward an external space. Based on a motion and/or a posture of the preset body part indicated by the image and/or the video, the wearable device 101 may identify a gesture performed by the preset body part.

Referring to FIG. 2, the wearable device 101 may identify a motion of the wearable device 101, based on execution of the motion tracker 273 in the framework layer 270. In a state in which the wearable device 101 is worn by the user, a motion of the wearable device 101 may be associated with a motion of the head of the user. For example, the wearable device 101 may identify a direction of the wearable device 101 that substantially matches a direction of the head. The wearable device 101 may identify the motion of the wearable device 101, based on sensor data of the sensor 230 including the IMU.

Referring to FIG. 2, the wearable device 101 may obtain information on an external space in which the wearable device 101 is included, or adjacent to the wearable device 101, based on execution of the external space recognizer 274 in the framework layer 270. The wearable device 101 may obtain the information, by using the camera 225 and/or the sensor 230. Referring to FIG. 2, in a state in which the external space recognizer 274 is executed, the wearable device 101 may identify a virtual space (e.g., the virtual space 130 of FIG. 1) mapped to the external space, based on the information obtained based on the external space recognizer 274. Based on the execution of the external space recognizer 274, the wearable device 101 may identify a location (e.g., a location and/or a point where the wearable device 101 is positioned) and/or a direction of the wearable device 101 in the external space. For example, based on the execution of the external space recognizer 274 and/or the motion tracker 273, the wearable device 101 may perform simultaneous localization and mapping (SLAM) to recognize the external space and the location of the wearable device 101 in the external space.

Referring to FIG. 2, the wearable device 101 may manage one or more virtual spaces (e.g., the first virtual space 130 of FIG. 1), based on execution of the virtual space manager 275 in the framework layer 270. For example, in a state in which the virtual space manager 275 is executed, the wearable device 101 may perform adding, deleting, and/or changing information for visualization (e.g., rendering) of a virtual space. In the state in which the virtual space manager 275 is executed, the wearable device 101 may classify a plurality of applications included in the application layer 260 into at least one of different virtual spaces managed by the virtual space manager 275. For example, the applications of wearable device 101 may be classified into any one of different virtual spaces, as a file being included and/or stored in a folder (or a directory). An embodiment is not limited thereto. In an embodiment, a specific application (e.g., the application 264 for the call connection) may be executed independently of the virtual spaces managed by the virtual space manager 275. Hereinafter, a global application may mean an application executed independently of the virtual spaces. In an embodiment, the wearable device 101 may display a virtual space exclusively provided from the specific application. In an embodiment, the wearable device 101 may link an application with a plurality of virtual spaces.

For example, the application (e.g., one or more applications classified as the application layer 260) installed in the wearable device 101 may be classified as illustrated in Table 1, based on the relationship with the virtual space managed by the virtual space manager 275.

**[Table 1]**

| Application | Shape of UI | Description |
|---|---|---|
| Mirroring application | 2 dimensional screen in virtual space | Screen of application executed by external electronic device (e.g., user terminal 281) is displayed through display 220 of wearable device 101 based on mirroring. |
| 2 dimensional application | Screen and/or widget rendered in 2 dimensions in virtual space | Screen of application compatible with user terminal 281 and installed in wearable device 101 is displayed through display 220. |
| 2 dimensional extended reality (XR) application | UI designed in 2 dimensions for extended reality | UI of application created for user experience for XR is displayed through display 220. |
| 3 dimensional application and/or widget | One or more virtual objects rendered in 3 dimensions (e.g., panel and/or widget) | One or more virtual objects rendered in 3 dimensions are displayed through display 220. |
| Immersive application | At least one virtual space | Portion of virtual space dedicated to application is displayed through display 220. |

Referring to FIG. 2, the wearable device 101 may manage a notification message occurred by the wearable device 101 and/or the external electronic device 280 based on the execution of the notification manager 276. The notification message may occur by a call of a preset application programming interface (API) associated with the execution of the notification manager 276. The notification message may occur based on the execution of an application (e.g., an application classified as the application layer 260) installed in the wearable device 101 and/or system software (e.g., a system service classified as the framework layer 270) of the wearable device 101. The notification message may be transmitted from the external electronic device 280 connected to the wearable device 101 through the communication circuitry 240. Referring to FIG. 2, in a state in which the notification manager 276 is executed, the wearable device 101 may classify a notification message. In order to classify the notification message, the wearable device 101 may obtain information associated with the notification message. The information may include a process that generated the notification message and/or an identifier of an application (e.g., a package name of an application). The information may include a parameter (e.g., a media access control (MAC) address and/or an internet protocol (IP) addresses of the electronic device) to distinguish the electronic device (e.g., the wearable devices 101 and/or the external electronic devices 280) generating the notification message. The information may include a parameter (e.g., a level of importance) set by the process generating the notification message.

In an embodiment, the wearable device 101 may determine a priority of the notification message based on information associated with the notification message and the virtual space displayed through the display 220. For example, the wearable device 101 may determine the priority of the notification message occurred from the global application (e.g., the application 264 for call connection and/or a messenger application) as a first priority. For example, the wearable device 101 may determine the priority of the notification message provided from an application linked with the virtual space displayed through the display 220 as the first priority. For example, the wearable device 101 may determine the priority of the notification message provided from a system service as the first priority, in case that it is not a currently ongoing task (e.g., download and/or update). For example, the wearable device 101 may determine the priority of the notification message provided from an application linked with another virtual space different from the virtual space displayed through the display 220 as a second priority. For example, the wearable device 101 may determine the priority of a notification message for a currently ongoing task provided from a system service as the second priority. For example, the wearable device 101 may determine the priority of the notification message provided from the external electronic device 280 as the second priority.

According to an embodiment, the wearable device 101 may display the notification message at an area corresponding to the determined priority among different areas (e.g., the areas divided by the panels 150 and 160 of FIG. 1) of the display 220. The areas may be spaced apart from the center of a screen (e.g., the screen 120 of FIG. 1) displayed in the display 220 by different distances. In the example, the wearable device 101 may display the notification message determined as the first priority at an area relatively close to the center of the screen among the areas, and display the notification message determined as the second priority at an area relatively far from the center of the screen among the areas.

As described above, according to an embodiment, the wearable device 101 may determine the priority of the notification message and display the notification message based on the determined priority. The wearable device 101 may determine a size and/or a location of the notification message occupying the display 220 based on the priority. For example, the wearable device 101 may dispose the notification message having a relatively high priority closer to the center of the screen than another notification message. The priority of the notification message may be associated with whether the notification message occurred from the application corresponding to the virtual space displayed through the display 220.

Hereinafter, an example of an operation of the wearable device 101 that adjusts the priority of the notification message based on the virtual space will be described with reference to FIGS. 3A, 3B, and 3C.

FIGS. 3A, 3B, and 3C illustrate an example of an operation in which a wearable device 101 displays one or more virtual spaces according to an embodiment. The wearable device 101 of FIGS. 1 to 2 may include the wearable device 101 of FIGS. 3A, 3B, and 3C. The operation of the wearable device 101 described with reference to FIGS. 3A, 3B, and 3C may be performed by the processor 210 of FIG. 2.

Referring to FIG. 3A, different states 301 and 302 of the wearable device 101 displaying at least one virtual space 310 are illustrated. In the state 301, the wearable device 101 may display a list of a plurality of virtual spaces (e.g., a first virtual space 311, a second virtual space 312, and a third virtual space 313) on a screen 120. The wearable device 101 may manage the plurality of virtual spaces based on execution of the virtual space manager 275 of FIG. 2. In the list of the state 301, the wearable device 101 may reduce and display at least a portion of the plurality of virtual spaces by reducing it to less than a preset size. In the state 301 of FIG. 3A, the wearable device 101 may display a visual object 320 for addition of the virtual space 310. Although the visual object 320 having a shape of a circle including a plus sign is illustrated as an example, an embodiment is not limited thereto.

In the state 301 of FIG. 3A, together with the list of the plurality of virtual spaces, the wearable device 101 may display a panel 330 for control of the wearable device 101. The panel 330 may be referred to as a control panel. The wearable device 101 may display a list 331 of applications recently executed by the wearable device 101 in the panel 330. The list 331 may include icons representing the applications. The wearable device 101 may display a button 332 for search of the applications installed in the wearable device 101 in the panel 330. In response to an input selecting the button 332, the wearable device 101 may display the list of all applications installed in the wearable device 101. The wearable device 101 may display a button 333 for a display of one or more notification messages in the panel 330.

In an embodiment, the wearable device 101 may selectively provide any one of the plurality of virtual spaces. For example, at a time point when a user 110 wears the wearable device 101, the wearable device 101 may display a specific virtual space referred to as a home, or may display the list of virtual spaces, such as the state 301. Each of the virtual spaces may be distinguished by different activities (e.g., a task, a game, and/or an exercise) of the user 110. In an embodiment, the wearable device 101 may display any one of the virtual spaces based on the activity of the user 110 identified by using time and/or a location. The wearable device 101 may classify each of a plurality of applications installed in the wearable device 101 into any one of virtual spaces based on an activity corresponding to the application.

In the state 301 of FIG. 3A, the wearable device 101 may identify an input selecting any one of the plurality of virtual spaces in the list. The wearable device 101 may identify the input based on at least one of a direction of a gaze of the user 110, a gesture performed by a hand, or a signal transmitted from a remote controller. For example, in response to the input selecting the first virtual space 311, the wearable device 101 may switch from the state 301 to the state 302.

Referring to FIG. 3A, in the state 302 displaying at least a portion of the first virtual space 311, the wearable device 101 may display a screen 340 of the application based on execution of the application assigned to the first virtual space 311. Although the screen 340 having a 2 dimensional rectangular shape is exemplary illustrated, an embodiment is not limited thereto, and the wearable device 101 may display a 3 dimensional figure based on the execution of the application. In the state 302, the wearable device 101 may display a button 334 to switch to the state 301 displaying the list of the plurality of virtual spaces in the panel 330.

Referring to FIG. 3A, in the state 302 in which the portion of the first virtual space 311 is displayed, according to an embodiment, the wearable device 101 may accumulate one or more notification messages on each of panels 150 and 160. From a top of the panels 150 and 160, the notification message may be displayed parallelly in a descending order of the latest order and/or a level of importance. The wearable device 101 may toggle whether to select the panels 150 and 160 based on an input selecting the button 333. For example, in the state 302 in which the panels 150 and 160 are displayed, in response to the input, the wearable device 101 may stop displaying the panels 150 and 160. For example, in case that the panels 150 and 160 are not displayed, in response to the input, the wearable device 101 may display the panels 150 and 160 based on the execution of the notification manager 276 of FIG. 2.

Hereinafter, an example of an operation of the wearable device 101 classifying and/or displaying the notification message to one of the panels 150 and 160 in the state 302 in which the portion of the first virtual space 311 is displayed will be described with reference to FIG. 3B. In the exemplary state 302 of FIG. 3B, it is assumed that application A and application D correspond to the first virtual space 311, and application B and application E correspond to the second virtual space 312. The application and the virtual space may not correspond one-to-one. For example, it is assumed that application F corresponds to both the first virtual space 311 and the second virtual space 312. It is assumed that application C, which is an example of an immersive application of Table 1, provides the third virtual space 313.

Referring to FIG. 3B, the state 302 of the wearable device 101 displaying the panels 150 and 160 along a horizontal direction of the screen 120 is illustrated. The wearable device 101 may display the panel 150 at a location spaced apart from a direction D of the screen 120 by a first angle, and display the panel 160 at a location spaced apart from the direction D by a second angle greater than the first angle. The first angle and/or the second angle may be associated with an angle range of the screen 120 displayed in the display. The first angle and/or the second angle may be associated with areas having different resolutions in the screen 120. The panels 150 and 160 may correspond to different priorities. For example, the wearable device 101 may display a notification message with a first priority on the panel 150, and a notification message with a second priority on the panel 160.

Referring to FIG. 3B, in the state 302 displaying the portion of the first virtual space 311 in the display (e.g., the display 220 of FIG. 2), the wearable device 101 may display a notification message provided from an application (e.g., the application A, the application D, and/or the application F) linked with the first virtual space 311 on the panel 150. Referring to FIG. 3B, since the wearable device 101 displays the notification message of the application corresponding to the first virtual space 311 on the panel 150 disposed close to a center of the screen 120 among the panels 150 and 160, the user 110 entering the first virtual space 311 may preferentially recognize an event occurred in the application corresponding to the first virtual space 311. For example, the wearable device 101 may classify the notification message occurred from the application linked with the first virtual space 311 displayed on the screen 120 as the first priority.

Referring to FIG. 3B, the wearable device 101 displaying the portion of the first virtual space 311 may display a notification message provided from an application (e.g., the application B, the application C, and/or the application E) linked with another virtual space different from the first virtual space 311 on the panel 160. For example, the notification message may be classified as a second priority by the wearable device 101. By using the panel 160 displayed in a relatively small size on the screen 120, the wearable device 101 may display a notification message having a relatively low priority.

According to an embodiment, the wearable device 101 may move and/or reclassify a notification message displayed on each of the panels 150 and 160 based on switching of a virtual space displayed through the screen 120. For example, in the state 302 displaying the portion of the first virtual space 311, the wearable device 101 may display the notification message occurred by the application B on the panel 160. In the example, in case that the virtual space displayed through the screen 120 is switched from the first virtual space 311 to the second virtual space 312, the wearable device 101 may display the notification message on the panel 150, since the application B corresponds to the second virtual space 312 displayed through the screen 120.

According to an embodiment, the wearable device 101 may display a notification message provided from a global application or provided from an application included in a preset list (e.g., the white list) on the panel 150 based on the first priority. The wearable device 101 may display a notification message provided from an external electronic device (e.g., the external electronic device 280 of FIG. 2) on the panel 160 based on the second priority.

According to an embodiment, the wearable device 101 may determine a priority of a notification message based on a virtual space in which an application is being executed. For example, in case that the application F is executed based on the second virtual space 312, the wearable device 101 displaying the portion of the first virtual space 311 may display a notification message provided from the application F on the panel 160 based on the second priority. In the example, in case that the application F is executed based on the first virtual space 311, the wearable device 101 may display the notification message provided from the application F on the panel 150.

Referring to FIG. 3C, an exemplary state 303 of the wearable device 101 displaying a notification message at different locations on the screen 120 is illustrated. The wearable device 101 may display the notification message provided from the global application (e.g., an application for call connection) by using a panel 360 overlapping a direction C of the screen 120. According to an embodiment, the wearable device 101 may render a portion 351 of the screen 120 at a first resolution, and another portion (e.g., a portion 352) distinguished from the portion 351 at a second resolution lower than the first resolution. A location of the portion 351 may be determined by at least one of the direction C of the screen 120, the direction of the gaze of the user 110, or a virtual object focused by the user 110.

Referring to FIG. 3C, the wearable device 101 may display a panel (e.g., the panels 150 and 360) to display a notification message with a relatively high priority in the portion 351 formed in a range of an angle A1 from the direction C. Since the panels 150 and 360 are included in the portion 351, they may be rendered based on the first resolution. The panel 160 to display a notification message having a relatively low priority may be displayed in the portion 352 rendered at the second resolution. The wearable device 101 may render the panel 160 at the second resolution lower than the first resolution. Since the panels 150, 160, and 360 to display the notification message are rendered at different resolutions, the wearable device 101 may render the notification message having the relatively low priority at the relatively low resolution. For example, the wearable device 101 may reduce resource used for rendering the notification message having the relatively low priority.

As described above, according to an embodiment, the wearable device 101 may classify a notification message into any one of the different panels 150 and 160 based on a specific virtual space displayed through the screen 120 among a plurality of virtual spaces. The wearable device 101 may select a panel on which the notification message is to be displayed based on a parameter referred to as a priority. A criterion determining the priority of the notification message by the wearable device 101 will be described with reference to a flowchart of FIGS. 6 to 9. The wearable device 101 may adaptively adjust distraction of the user 110 occurred by the notification message by using the panels 150 and 160 disposed at different locations on the screen 120.

Since a portion of the panel 160 is displayed outside the screen 120 as in the state 302 of FIG. 3B and/or the state 303 of FIG. 3C, the user 110 may turn a head to see the entire panel 160. According to a method in which the wearable device 101 displays the panels 150 and 160, the wearable device 101 may fix or move a location of the panels 150 and 160 according to a motion of the head. Hereinafter, an example of an operation in which the wearable device 101 moves the panels 150 and 160 based on the motion will be described with reference to FIGS. 4A to 4B and/or 5A to 5B.

According to an embodiment, a method in which the wearable device 101 determines a reference location of the virtual object may include a world lock method and/or a body lock method. The reference location may be used to determine the location of the virtual object displayed on the screen 120. In an embodiment determining the reference location of the virtual object based on the world lock method, the wearable device 101 may determine a point of the virtual space 130 as the reference location of the virtual object. In an embodiment determining the reference location of the virtual object based on the body lock method, the wearable device 101 may determine the direction and/or the location of a body part (e.g., the head) of the user 110 wearing the wearable device 101 as the reference location of the virtual object.

FIGS. 4A to 4B illustrate an example of an operation in which a wearable device 101 displays a notification message according to an embodiment. The wearable device 101 of FIGS. 1 to 2 may include the wearable device 101 of FIGS. 4A to 4B. The operation of the wearable device 101 described with reference to FIGS. 4A to 4B may be performed by the processor 210 of FIG. 2.

Referring to FIGS. 4A to 4B, different states 401, 402, and 403 of the wearable device 101 displaying a notification message based on a world lock method are illustrated. The wearable device 101 may determine a priority of the notification message based on the operation described with reference to FIGS. 1 to 2 and/or 3A, 3B, and 3C. Based on the determined priority, the wearable device 101 may display the notification message on any one of panels 150 and 160.

In the state 401 of FIG. 4A, the wearable device 101 may determine a point of a virtual space 130 as a reference location of a panel (e.g., the panels 150 and 160) to display the notification message. For example, the wearable device 101 may determine a first point of the virtual space 130 spaced apart from a direction D1 of a center of a scree n in the virtual space 130 by a first angle as the location of the panel 150. In the example, the wearable device 101 may determine a second point of the virtual space 130 spaced apart from the direction D1 by a second angle greater than the first angle as the location of the panel 160.

Referring to FIG. 4A, the wearable device 101 displaying the panels 150 and 160 based on the world lock method may display the panels 150 and 160 based on the first point and the second point independently of a motion of the wearable device 101 after determining the first point and the second point. For example, it is assumed that the direction of the screen is changed to a direction D2, as the user 110 wearing the wearable device 101 rotates the head in a state 401 displaying the panels 150 and 160 based on the first point and the second point. In the state 402 in which the screen faces the direction D2, the wearable device 101 may move the panel 150 on the screen based on a relationship between the direction D2 and the first point. Similarly, based on a relationship between the direction D2 and the second point, the wearable device 101 may move the panel 160 on the screen. For example, in case that the user 110 rotates the head toward the panel 160, the wearable device 101 may move the panels 150 and 160 in the screen in a direction opposite to the direction in which the head rotates. Referring to the exemplary state 402 of FIG. 4A, as the panel 160 moves into the screen, the wearable device 101 may display the notification message included in the panel 160 to the user 110.

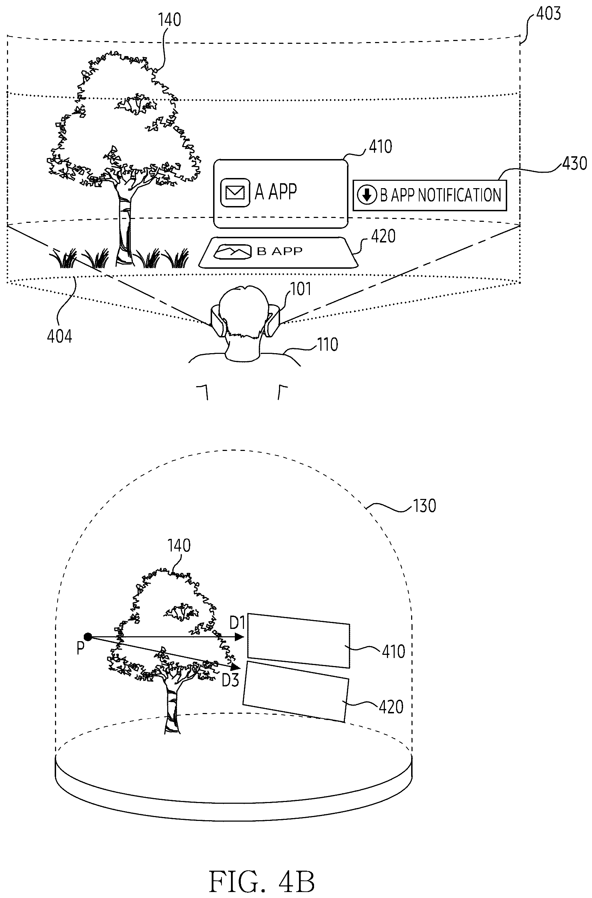

As the states 401 and 402 of FIG. 4A, the wearable device 101 displaying the panels 150 and 160 along a horizontal direction of the screen may move the panel 160 into the screen based on the motion of the wearable device 101 rotating along the horizontal direction. An embodiment is not limited thereto. Referring to FIG. 4B, exemplary states 403 and 404 of the wearable device 101 displaying the panels 410 and 420 along a vertical direction on the screen are illustrated. In the state 403, the wearable device 101 may display a portion of the virtual space 130 on the screen based on a view angle in the virtual space 130 formed along the direction D1 at a point P.

In an embodiment, the wearable device 101 may selectively display the notification message on any one of the panels 410 and 420 based on whether the application providing the notification message is associated with the virtual space 130. In a state 403 in which a distance between the center of the screen and the panel 410 is smaller than a distance between the center of the screen and the panel 420, the wearable device 101 may display the notification message occurred by an application linked with the virtual space 130 on the panel 410. The wearable device 101 may display the notification message occurred by the application linked with another virtual space different from the virtual space 130 on the panel 420. Referring to FIG. 4B, the wearable device 101 may display a visual object 430 associated with the panel 420 on a portion of the screen based on displaying the notification message on the panel 420. The visual object 430 may include text and/or an icon representing at least one notification message included in the panel 420.

Referring to FIG. 4B, in the exemplary state 403 in which the wearable device 101 displays the panels 410 and 420 based on the world lock method, the wearable device 101 may fix the location at which each of the panels 410 and 420 is displayed based on a coordinate system of the virtual space 130. For example, when the user 110 rotates the head in a direction D3, the wearable device 101 may switch to the state 404 and move the panels 410 and 420 on the screen in the opposite direction to the direction in which the head is rotated. According to movement of the panels 410 and 420, the user 110 may see the panel 420 moved into the screen in the state 404.

As described above, according to an embodiment, the wearable device 101 may combine the virtual object and/or the visual object representing the notification message at a point (e.g., a point of any one of the panels 150, 160, 410, and 420) of the virtual space 130 based on the priority of the notification message. In case that the notification message is displayed at the fixed location in the virtual space 130, the wearable device 101 may move the notification message into the screen based on the motion (e.g., the rotation of the head) of the user 110 wearing the wearable device 101.

Hereinafter, according to an embodiment, an example of an operation in which the wearable device 101 displays the notification message based on the body lock method will be described with reference to FIGS. 5A to 5B.

FIGS. 5A to 5B illustrate an example of an operation in which a wearable device 101 displays a notification message according to an embodiment. The wearable device 101 of FIGS. 1 to 2 may include the wearable device 101 of FIGS. 5A to 5B. The operation of the wearable device 101 described with reference to FIGS. 5A to 5B may be performed by the processor 210 of FIG. 2.

Referring to FIGS. 5A to 5B, different states 501, 502, and 503 of the wearable device 101 displaying the notification message based on a body lock method are illustrated. Based on occurrence of the notification message, the wearable device 101 may determine a priority of the notification message based on the operation described with reference to FIGS. 1 to 2, and/or 3A, 3B, and 3C. The wearable device 101 may display the notification message by using the panels 150 and 160 corresponding to each of the different priorities. For example, the wearable device 101 may display the notification message determined as a first priority on the panel 150 disposed close to a center of a screen among the panels 150 and 160. The wearable device 101 may display a notification message determined as a second priority different from the first priority on the panel 160.

Referring to FIG. 5A, in the state 501 in which the panels 150 and 160 are displayed based on the body lock method, the wearable device 101 may determine a location of the panels 150 and 160 based on a central axis XC of the screen. For example, an angle A1 between the panel 150 and the central axis XC may be smaller than an angle A2 between the panel 160 and the central axis XC. Referring to FIG. 5A, the angle A1 between a central axis X1 of the panel 150 and the central axis XC of the screen and the angle A2 between a central axis X2 of the panel 16 and the central axis XC of the screen are exemplarily illustrated, but an embodiment is not limited thereto. In case that the wearable device 101 determines the location of the panels 150 and 160 based on the central axis XC of the screen, the location of the panels 150 and 160 may be fixed in the screen independently of a motion of a head of a user 110 wearing the wearable device 101. In the exemplary state 501 of FIG. 5A, in case that the user 110 rotates the head in a direction R1, the wearable device 101 may enter the state 502. In the state 502, a virtual object 140 disposed at a point of the virtual space 130 may be moved in a direction opposite to the direction R1 in the screen. While being switched from the state 501 to the state 502, the wearable device 101 may maintain an angle at which the panels 150 and 160 are spaced apart from the central axis of the screen based on the body lock. Referring to the state 502 of FIG. 5A, the location of the panels 150 and 160 displayed on the screen may not be changed independently of the motion of the head rotated along the direction R1. The wearable device 101 may measure the motion of the head, by using a sensor (e.g., the sensor 230 of FIG. 2).

Referring to FIG. 5A, in a state 501 in which the panels 150 and 160 are displayed based on the body lock method, the wearable device 101 may display a visual object 510 to move a portion of the panel 160 rendered outside the screen into the screen. Although the visual object 510 including preset text (e.g., "more view") is illustrated as an example, an embodiment is not limited thereto. For example, the visual object 510 may be displayed by wearable device 101 to inform that the notification message is displayed outside a boundary line of the screen.

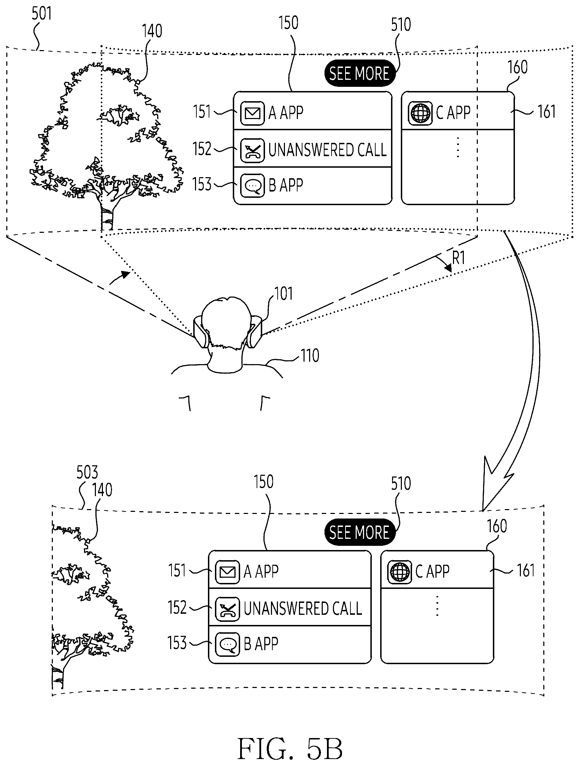

Referring to FIG. 5B, in the state 501 in which at least a portion of the panel 160 is rendered outside the screen, the wearable device 101 may fix the location of the panels 150 and 160 at a specific point in a virtual space in response to an input associated with the visual object 510. The input associated with the visual object 510 may be identified by a direction of a gaze of the user 110 toward the visual object 510 and/or a gesture of a hand of the user 110. The input associated with the visual object 510 may be identified by a gesture (e.g., a gesture pressing the button) for a button formed on the wearable device 101 and/or a remote controller connected to the wearable device 101.

For example, in a state selecting the visual object 510, the user 110 may rotate the head along a direction R1. In the state 501 of FIG. 5B in which the visual object 510 is selected, the wearable device 101 may switch to the state 503 based on the head rotated along the direction R1. Since the panels 150 and 160 are fixed at points in the virtual space by selection of the visual object 510, as the wearable device 101 is rotated along the direction R1, the wearable device 101 may move the panel 160 into the screen. The visual object 510 may be displayed to switch the method of displaying the panels 150 and 160 between the world lock method or the body lock method.

As described above, according to an embodiment, the wearable device 101 may display the notification message while providing a user experience based on an AR, an MR, a VR and/or VST. The notification message may be displayed in a movable area (e.g., the panels 150, 160, 410, and 420) by the motion of the wearable device 101. The wearable device 101 may display the notification message at another location according to the priority (or a level of importance) by using areas displayed parallelly in the screen. For example, an area to display a relatively important notification message may be displayed closer to the center of the screen than another area. The wearable device 101 may move the area in which the notification message is displayed in the screen based on the rotation of the head of the user 110.

Hereinafter, according to an embodiment, an example of the operation of the wearable device 101 that determines the priority of the notification message and displays the notification message based on the determined priority will be described with reference to FIGS. 6 to 9.

FIG. 6 illustrates an example of a flowchart of a wearable device according to an embodiment. The wearable device 101 of FIGS. 1 to 2 may include the wearable device of FIG. 6. At least one of operations of FIG. 6 may be performed by the processor 210 of FIG. 2.

Referring to FIG. 6, in an operation 610, according to an embodiment, the wearable device may display at least a portion of a virtual space. The wearable device may display at least a portion of the virtual space on a screen (e.g., the screen 120 of FIG. 1) displayed through a display (e.g., the display 220 of FIG. 2). The wearable device may select a portion to be displayed through the screen in the virtual space based on a view angle formed based on a point in the virtual space. By changing the view angle according to a motion of the wearable device or a motion of a user wearing the wearable device, the wearable device may provide the user with a user experience such as entering the virtual space.

Referring to FIG. 6, in an operation 620, according to an embodiment, the wearable device may identify occurrence of a notification message. The wearable device may identify the occurrence of the notification message based on execution of the notification manager 276 of FIG. 2. The notification message may include information (e.g., information on at least one of text, an image, and/or a video to be displayed through a display, an audio signal to be displayed through a speaker, or vibration to be outputted through a haptic actuator) to be outputted through the notification message. The notification message may include information on a source of the notification message. The source indicated by the information may include an application and/or an electronic device, generating the notification message.

Referring to FIG. 6, in an operation 630, according to an embodiment, the wearable device may determine whether an occurred notification message occurred by an application. The wearable device may determine whether the notification message of the operation 620 is generated by an application classified into the application layer 260 of FIG. 2. Referring to FIG. 6, in case that the notification message occurs by an application (630-YES), the wearable device may perform an operation 640. In case that the notification message does not occur by the application (630-NO), the wearable device may perform an operation 660.

Referring to FIG. 6, in the operation 640, according to an embodiment, the wearable device may determine whether an application associated with a notification message is included in a preset list. The preset list may include an application (e.g., the application 264 of FIG. 2) for call connection and/or a messenger application. The preset list may be stored in the wearable device. The preset list may include a white list generated by the wearable device and/or a vendor of system software. In case that the application generating the notification message is included in the preset list (640-YES), the wearable device may perform an operation 680. In case that the application generating the notification message is not included in the preset list (640-NO), the wearable device may perform an operation 650.

Referring to FIG. 6, in the operation 650, according to an embodiment, the wearable device may determine whether the notification message corresponds to the virtual space displayed through the display. The wearable device may identify a relationship between the virtual space displayed based on the operation 610 and the application generating the notification message, based on execution of the virtual space manager 275 of FIG. 2. In case that the notification message corresponds to the virtual space displayed through the display (650-YES), the wearable device may perform the operation 680. In case that the notification message does not correspond to the virtual space displayed through the display (650-NO), the wearable device may perform an operation 690.

Referring to FIG. 6, in the operation 660, according to an embodiment, the wearable device may determine whether the occurred notification message occurred by a system process. The system process may be associated with an application and/or a program classified into the framework layer 270 of FIG. 2. In case that the notification message does not occur by the system process (660-NO), the wearable device may perform the operation 690. The application and the system process of the operations 630 and 660 of FIG. 6 are the programs installed in the wearable device, and in case that the notification message is generated by an external electronic device (e.g., the external electronic device 280 of FIG. 2), the notification message may does not occur in both the application and the system process of the wearable device. In case that the notification message occurs by the system process (660-YES), the wearable device may perform an operation 670.

Referring to FIG. 6, in the operation 670, according to an embodiment, the wearable device may determine whether the notification message occurred to notify an ongoing task of the system process. The ongoing task may include uploading and/or downloading a file through a network. The notification message occurred to notify the ongoing task may occur to notify the progress of the ongoing task performed by the system process (or a system service). In case that the notification message occurs to notify the ongoing task (670-YES), the wearable device may perform the operation 690. When the notification message occurs by the system process independently of the ongoing task (670-YES), the wearable device may perform the operation 680.

Referring to FIG. 6, in the operation 680, according to an embodiment, the wearable device may display the notification message at a first area. The wearable device may display the notification message at an area formed in a range less than a preset angle and/or a distance from the center of the screen, such as the panel 150 of FIG. 1. In the operation 680, the wearable device may determine a priority of the notification message as a first priority. The first area may be disposed in a screen including at least a portion of the virtual space of the wearable device to display the notification message classified as the first priority.

Referring to FIG. 6, in the operation 690, according to an embodiment, the wearable device may display the notification message at a second area different from the first area. The wearable device may display the notification message at an area farther from the center of the screen than the first panel 150, such as the panel 160 of FIG. 1. In the operation 690, the wearable device may determine the priority of the notification message as the second priority. The second area may be disposed in the screen to display the notification message classified as the second priority. In the screen, the first area may be disposed between the second area and the center of the screen.

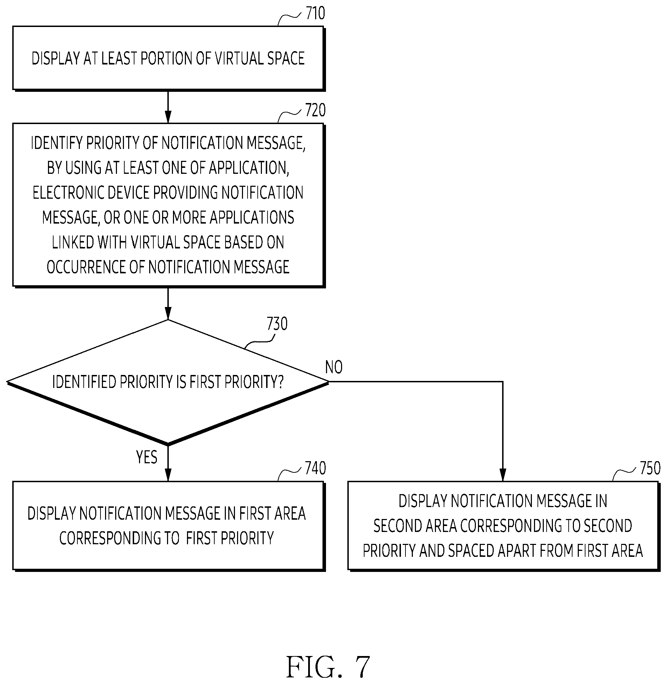

FIG. 7 illustrates an example of a flowchart of a wearable device according to an embodiment. The wearable device 101 of FIGS. 1 to 2 may include the wearable device of FIG. 7. At least one of operations of FIG. 7 may be performed by the processor 210 of FIG. 2. At least one of the operations of FIG. 7 may be associated with at least one of the operations of FIG. 6.

Referring to FIG. 7, in an operation 710, according to an embodiment, the wearable device may display at least a portion of a virtual space. The wearable device may perform the operation 710 similar to the operation 610 of FIG. 6.

Referring to FIG. 7, in an operation 720, according to an embodiment, the wearable device may identify a priority of a notification message, by using at least one of an application, an electronic device providing the notification message, or one or more applications linked with the virtual space based on occurrence of the notification message. The wearable device may determine the priority of the notification message among a first priority or a second priority based on the operations described with reference to FIG. 6.

Referring to FIG. 7, in an operation 730, according to an embodiment, the wearable device may identify whether the identified priority is determined as the first priority. In case that the priority is the first priority (730-YES), the wearable device may perform an operation 740. In case that the priority is not the first priority (730-NO), the wearable device may perform an operation 750.

Referring to FIG. 7, in the operation 740, according to an embodiment, the wearable device may display the notification message at a first area corresponding to the first priority. The wearable device may perform the operation 740 similar to the operation 680 of FIG. 6. Referring to FIG. 7, in the operation 750, according to an embodiment, the wearable device may display the notification message at a second area corresponding to the second priority and spaced apart from the first area. The wearable device may perform the operation 750 similar to the operation 690 of FIG. 6. Referring to the operations 740 and 750 of FIG. 7, the wearable device may classify the notification message into different areas according to the priority. In a screen including at least a portion of the virtual space, the first area may be disposed between the second area and the center of the screen. In an embodiment, at least a portion of the second area may be disposed outside a boundary line of the screen. Based on the operations 740 and 750, the wearable device may display a notification message having a relatively high priority closer to the center of the screen and a notification message having a relatively low priority adjacent to the boundary line of the screen or outside the boundary line of the screen.

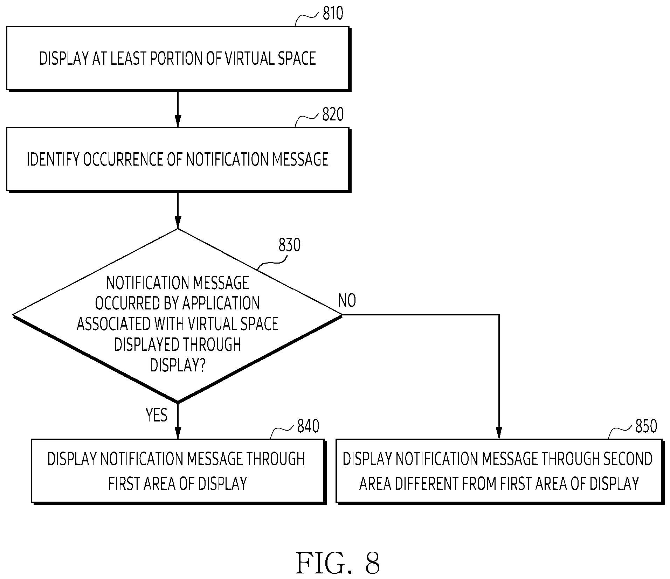

FIG. 8 illustrates an example of a flowchart of a wearable device according to an embodiment. The wearable device 101 of FIGS. 1 to 2 may include the wearable device of FIG. 8. At least one of operations of FIG. 8 may be performed by the processor 210 of FIG. 2. At least one of the operations of FIG. 8 may be associated with at least one of the operations of FIGS. 6 to 7.

Referring to FIG. 8, in an operation 810, according to an embodiment, the wearable device may display at least a portion of a virtual space. The wearable device may perform the operation 810 similar to the operation 610 of FIG. 6 and/or the operation 710 of FIG. 7. Referring to FIG. 8, in an operation 820, according to an embodiment, the wearable device may identify occurrence of a notification message. The wearable device may perform the operation 820 similar to the operation 620 of FIG. 6.

Referring to FIG. 8, in an operation 830, according to an embodiment, the wearable device may identify whether the notification message occurred by an application associated with the virtual space displayed through a display. The wearable device may perform the operation 830 similar to the operation 650 of FIG. 6. For example, in case that the wearable device stores information to display a plurality of virtual spaces, the wearable device may identify the virtual space corresponding to an application associated with generation of the notification message among the plurality of virtual spaces, by performing the operation 830. In case that the notification message of the operation 820 occurred by the application associated with the virtual space of the operation 810 (830-YES), the wearable device may perform an operation 840. In case that the notification message occurred by an application in another virtual space different from the virtual space (830-NO), the wearable device may perform an operation 850.

Referring to FIG. 8, in the operation 840, according to an embodiment, the wearable device may display the notification message through a first area of the display. The wearable device may perform the operation 840 similar to the operation 680 of FIG. 6 and/or the operation 740 of FIG. 7. The first area may be disposed on a screen to display at least a portion of the virtual space for a display of the notification message having a first priority. Referring to FIG. 8, in the operation 850, according to an embodiment, the wearable device may display the notification message through a second area different from the first area of the display. The wearable device may perform the operation 850 similar to the operation 690 of FIG. 6 and/or the operation 750 of FIG. 7. The second area may be disposed closer to a boundary line than the first area in the screen for a display of the notification message having a second priority.

As described above, the wearable device that provides a user experience based on a plurality of virtual spaces may dispose the notification message associated with a specific virtual space provided to the user closer to the center of the screen than the notification message associated with another virtual space. The user wearing the wearable device may preferentially recognize the notification message associated with the virtual space which the user entered.

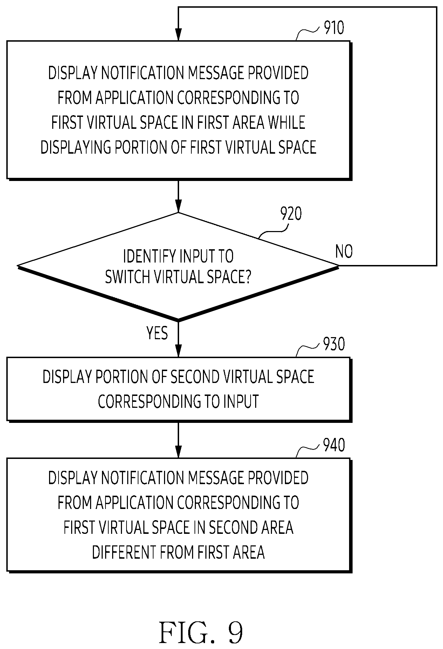

FIG. 9 illustrates an example of a flowchart of a wearable device according to an embodiment. The wearable device 101 of FIGS. 1 to 2 may include the wearable device of FIG. 9. At least one of operations of FIG. 9 may be performed by the processor 210 of FIG. 2. At least one of the operations of FIG. 9 may be associated with at least one of the operations of FIGS. 6 to 8.

Referring to FIG. 9, in an operation 910, according to an embodiment, the wearable device may display a notification message provided from an application corresponding to a first virtual space at a first area while displaying a portion of the first virtual space. The wearable device may display the first area and a second area to display the notification message, and display the notification message at either the first area or the second area according to a priority of the notification message. The wearable device may display the notification message associated with the virtual space provided to a user at the first area by performing at least one of the operations described with reference to FIGS. 6 to 8.

Referring to FIG. 9, in an operation 920, according to an embodiment, the wearable device may identify an input to switch the virtual space. The input to switch the virtual space may include an input to display a list of a plurality of virtual spaces managed by the wearable device, such as an input selecting the button 334 of FIG. 3A. The input to switch the virtual space may include an input selecting a second virtual space distinguished from the first virtual space in the list. Prior to identifying the input to switch the virtual space (920-NO), the wearable device may maintain displaying the notification message associated with the first virtual space at the first area based on the operation 910. In response to identifying the input to switch the virtual space (920-YES), the wearable device may perform an operation 930.

Referring to FIG. 9, in the operation 930, according to an embodiment, the wearable device may display a portion of the second virtual space corresponding to an input. Based on displaying the portion of the second virtual space, the wearable device may reclassify the notification message accumulated at the first area and the second area. Reclassifying the notification message may include resetting the priority of the notification message. For example, the wearable device may adjust the priority corresponding to the notification message of the operation 910 based on one or more applications linked with the second virtual space.

Referring to FIG. 9, in the operation 930, according to an embodiment, the wearable device may display the notification message provided from the application corresponding to the first virtual space at the second area different from the first area. For example, in case that the application providing the notification message is provided from the first virtual space different from the second virtual space displayed to the user, the wearable device may move the notification message to the second area.

As described above, according to an embodiment, the wearable device may move the notification message displayed at different areas based on a switch of the virtual space. Movement of the notification message may be performed based on a change in the priority assigned to the notification message.

Hereinafter, an example of a form factor of the wearable device described with reference to FIGS. 1 to 9 will be described with reference to FIGS. 10A to 10B and/or FIGS. 11A to 11B.

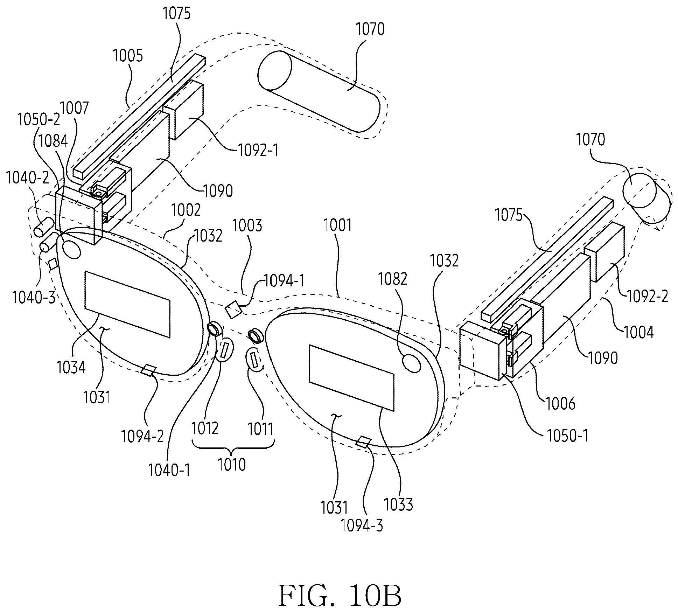

FIG. 10A illustrates an example of a perspective view of a wearable device according to an embodiment. FIG. 10B illustrates an example of one or more hardware disposed in a wearable device 1000 according to an embodiment. The wearable device 101 of FIGS. 1 and 2 may include the wearable device 1000 of FIGS. 10A and 10B. As shown in FIG. 10A, the wearable device 1000 according to an embodiment may include at least one display 1050, and a frame supporting the at least one display 1050.

According to an embodiment, the wearable device 1000 may be wearable on a portion of the user's body. The wearable device 1000 may provide augmented reality (AR), virtual reality (VR), or mixed reality (MR) combining the augmented reality and the virtual reality to a user wearing the wearable device 1000. For example, the wearable device 1000 may output a virtual reality image to the user through at least one display 1050, in response to a user's preset gesture obtained through a motion recognition camera 1040-2 of FIG. 10B.

According to an embodiment, the at least one display 1050 in the wearable device 1000 may provide visual information to a user. The at least one display 1050 may include the display 220 of FIG. 2. For example, the at least one display 1050 may include a transparent or translucent lens. The at least one display 1050 may include a first display 1050-1 and/or a second display 1050-2 spaced apart from the first display 1050-1. For example, the first display 1050-1 and the second display 1050-2 may be disposed at positions corresponding to the user's left and right eyes, respectively.

Referring to FIG. 10B, the at least one display 1050 may form a display area on the lens to provide a user wearing the wearable device 1000 with visual information included in ambient light passing through the lens and other visual information distinct from the visual information. The lens may be formed based on at least one of a fresnel lens, a pancake lens, or a multi-channel lens. The display area formed by the at least one display 1050 may be formed on the second surface 1032 of the first surface 1031 and the second surface 1032 of the lens. When the user wears the wearable device 1000, ambient light may be transmitted to the user by being incident on the first surface 1031 and being penetrated through the second surface 1032. For another example, the at least one display 1050 may display a virtual reality image to be coupled with a reality screen transmitted through ambient light. The virtual reality image outputted from the at least one display 1050 may be transmitted to eyes of the user, through one or more hardware (e.g., optical devices 1082 and 1084, and/or at least one waveguides 1033 and 1034) included in the wearable device 1000.

According to an embodiment, the wearable device 1000 may include waveguides 1033 and 1034 that transmit light transmitted from the at least one display 1050 and relayed by the at least one optical device 1082 and 1084 by diffracting to the user. The waveguides 1033 and 1034 may be formed based on at least one of glass, plastic, or polymer. A nano pattern may be formed on at least a portion of the outside or inside of the waveguides 1033 and 1034. The nano pattern may be formed based on a grating structure having a polygonal or curved shape. Light incident to an end of the waveguides 1033 and 1034 may be propagated to another end of the waveguides 1033 and 1034 by the nano pattern. The waveguides 1033 and 1034 may include at least one of at least one diffraction element (e.g., a diffractive optical element (DOE), a holographic optical element (HOE)), and a reflection element (e.g., a reflection mirror). For example, the waveguides 1033 and 1034 may be disposed in the wearable device 1000 to guide a screen displayed by the at least one display 1050 to the user's eyes. For example, the screen may be transmitted to the user's eyes through total internal reflection (TIR) generated in the waveguides 1033 and 1034.

According to an embodiment, the wearable device 1000 may analyze an object included in a real image collected through a photographing camera 1040-1, combine with a virtual object corresponding to an object that become a subject of augmented reality provision among the analyzed object, and display on the at least one display 1050. The virtual object may include at least one of text and images for various information associated with the object included in the real image. The wearable device 1000 may analyze the object based on a multi-camera such as a stereo camera. For the object analysis, the wearable device 1000 may execute time-of-flight (ToF) and/or simultaneous localization and mapping (SLAM) supported by the multi-camera. The user wearing the wearable device 1000 may watch an image displayed on the at least one display 1050.

According to an embodiment, a frame may be configured with a physical structure in which the wearable device 1000 may be worn on the user's body. According to an embodiment, the frame may be configured so that when the user wears the wearable device 1000, the first display 1050-1 and the second display 1050-2 may be positioned corresponding to the user's left and right eyes. The frame may support the at least one display 1050. For example, the frame may support the first display 1050-1 and the second display 1050-2 to be positioned at positions corresponding to the user's left and right eyes.

Referring to FIG. 10A, according to an embodiment, the frame may include an area 1020 at least partially in contact with the portion of the user's body in case that the user wears the wearable device 1000. For example, the area 1020 of the frame in contact with the portion of the user's body may include an area in contact with a portion of the user's nose, a portion of the user's ear, and a portion of the side of the user's face that the wearable device 1000 contacts. According to an embodiment, the frame may include a nose pad 1010 that is contacted on the portion of the user's body. When the wearable device 1000 is worn by the user, the nose pad 1010 may be contacted on the portion of the user's nose. The frame may include a first temple 1004 and a second temple 1005, which are contacted on another portion of the user's body that is distinct from the portion of the user's body.

According to an embodiment, the frame may include a first rim 1001 surrounding at least a portion of the first display 1050-1, a second rim 1002 surrounding at least a portion of the second display 1050-2, a bridge 1003 disposed between the first rim 1001 and the second rim 1002, a first pad 1011 disposed along a portion of the edge of the first rim 1001 from one end of the bridge 1003, a second pad 1012 disposed along a portion of the edge of the second rim 1002 from the other end of the bridge 1003, the first temple 1004 extending from the first rim 1001 and fixed to a portion of the wearer's ear, and the second temple 1005 extending from the second rim 1002 and fixed to a portion of the ear opposite to the ear. The first pad 1011 and the second pad 1012 may be in contact with the portion of the user's nose, and the first temple 1004 and the second temple 1005 may be in contact with a portion of the user's face and the portion of the user's ear. The temples 1004 and 1005 may be rotatably connected to the rim through hinge units 1006 and 1007 of FIG. 10B. The first temple 1004 may be rotatably connected with respect to the first rim 1001 through the first hinge unit 1006 disposed between the first rim 1001 and the first temple 1004. The second temple 1005 may be rotatably connected with respect to the second rim 1002 through the second hinge unit 1007 disposed between the second rim 1002 and the second temple 1005. According to an embodiment, the wearable device 1000 may identify an external object (e.g., a user's fingertip) touching the frame and/or a gesture performed by the external object by using a touch sensor, a grip sensor, and/or a proximity sensor formed on at least a portion of the surface of the frame.

According to an embodiment, the wearable device 1000 may include hardware (e.g., hardware described above based on the block diagram of FIG. 2) that performs various functions. For example, the hardware may include a battery module 1070, an antenna module 1075, optical devices 1082 and 1084, speakers 1092-1 and 1092-2, microphones 1094-1, 1094-2, and 1094-3, a depth sensor module (not illustrated), and/or a printed circuit board (PCB) 1090. Various hardware may be disposed in the frame.

According to an embodiment, the microphones 1094-1, 1094-2, and 1094-3 of the wearable device 1000 may obtain a sound signal, by being disposed on at least a portion of the frame. The first microphone 1094-1 disposed on the nose pad 1010, the second microphone 1094-2 disposed on the second rim 1002, and the third microphone 1094-3 disposed on the first rim 1001 are illustrated in FIG. 10B, but the number and disposition of the microphone 1094 are not limited to an embodiment of FIG. 10B. In a case that the number of the microphone 1094 included in the wearable device 1000 is two or more, the wearable device 1000 may identify a direction of the sound signal by using a plurality of microphones disposed on different portions of the frame.

According to an embodiment, the optical devices 1082 and 1084 may transmit a virtual object transmitted from the at least one display 1050 to the wave guides 1033 and 1034. For example, the optical devices 1082 and 1084 may be projectors. The optical devices 1082 and 1084 may be disposed adjacent to the at least one display 1050 or may be included in the at least one display 1050 as a portion of the at least one display 1050. The first optical device 1082 may correspond to the first display 1050-1, and the second optical device 1084 may correspond to the second display 1050-2. The first optical device 1082 may transmit light outputted from the first display 1050-1 to the first waveguide 1033, and the second optical device 1084 may transmit light outputted from the second display 1050-2 to the second waveguide 1034.

In an embodiment, a camera 1040 may include an eye tracking camera (ET CAM) 1040-1, a motion recognition camera 1040-2 and/or the photographing camera 1040-3. The photographing camera 1040-3, the eye tracking camera 1040-1, and the motion recognition camera 1040-2 may be disposed at different positions on the frame and may perform different functions. The photographing camera 1040-3, the eye tracking camera 1040-1, and the motion recognition camera 1040-2 may be an example of the camera 225 of FIG. 2. The eye tracking camera 1040-1 may output data indicating a gaze of the user wearing the wearable device 1000. For example, the wearable device 1000 may detect the gaze from an image including the user's pupil, obtained through the eye tracking camera 1040-1. An example in which the eye tracking camera 1040-1 is disposed toward the user's right eye is illustrated in FIG. 10B, but the embodiment is not limited thereto, and the eye tracking camera 1040-1 may be disposed alone toward the user's left eye or may be disposed toward two eyes.

In an embodiment, the photographing camera 1040-3 may photograph a real image or background to be matched with a virtual image in order to implement the augmented reality or mixed reality content. The photographing camera may photograph an image of a specific object existing at a position viewed by the user and may provide the image to the at least one display 1050. The at least one display 1050 may display one image in which a virtual image provided through the optical devices 1082 and 1084 is overlapped with information on the real image or background including the image of the specific object obtained by using the photographing camera. In an embodiment, the photographing camera may be disposed on the bridge 1003 disposed between the first rim 1001 and the second rim 1002.

In an embodiment, the eye tracking camera 1040-1 may implement a more realistic augmented reality by matching the user's gaze with the visual information provided on the at least one display 1050, by tracking the gaze of the user wearing the wearable device 1000. For example, when the user looks at the front, the wearable device 1000 may naturally display environment information associated with the user's front on the at least one display 1050 at a position where the user is positioned. The eye tracking camera 1040-1 may be configured to capture an image of the user's pupil in order to determine the user's gaze. For example, the eye tracking camera 1040-1 may receive gaze detection light reflected from the user's pupil and may track the user's gaze based on the position and movement of the received gaze detection light. In an embodiment, the eye tracking camera 1040-1 may be disposed at a position corresponding to the user's left and right eyes. For example, the eye tracking camera 1040-1 may be disposed in the first rim 1001 and/or the second rim 1002 to face the direction in which the user wearing the wearable device 1000 is positioned.

The motion recognition camera 1040-2 may provide a specific event to the screen provided on the at least one display 1050 by recognizing the movement of the whole or portion of the user's body, such as the user's torso, hand, or face. The motion recognition camera 1040-2 may obtain a signal corresponding to motion by recognizing the user's gesture, and may provide a display corresponding to the signal to the at least one display 1050. A processor may identify a signal corresponding to the operation and may perform a preset function based on the identification. In an embodiment, the motion recognition camera 1040-2 may be disposed on the first rim 1001 and/or the second rim 1002.

In an embodiment, the camera 1040 included in the wearable device 1000 is not limited to the above-described eye tracking camera 1040-1 and the motion recognition camera 1040-2. For example, the wearable device 1000 may identify an external object included in the FoV by using a photographing camera 1040-3 disposed toward the user's FoV. The wearable device 1000 identifying the external object may be performed based on a sensor for identifying a distance between the wearable device 1000 and the external object, such as a depth sensor and/or a time of flight (ToF) sensor. The camera 1040 disposed toward the FoV may support an autofocus function and/or an optical image stabilization (OIS) function. For example, in order to obtain an image including a face of the user wearing the wearable device 1000, the wearable device 1000 may include the camera 1040 (e.g., a face tracking (FT) camera) disposed toward the face.

Although not illustrated, the wearable device 1000 according to an embodiment may further include a light source (e.g., LED) that emits light toward a subject (e.g., user's eyes, face, and/or an external object in the FoV) photographed by using the camera 1040. The light source may include an LED having an infrared wavelength. The light source may be disposed on at least one of the frame, and the hinge units 1006 and 1007.

According to an embodiment, the battery module 1070 may supply power to electronic components of the wearable device 1000. In an embodiment, the battery module 1070 may be disposed in the first temple 1004 and/or the second temple 1005. For example, the battery module 1070 may be a plurality of battery modules 1070. The plurality of battery modules 1070, respectively, may be disposed on each of the first temple 1004 and the second temple 1005. In an embodiment, the battery module 1070 may be disposed at an end of the first temple 1004 and/or the second temple 1005.

The antenna module 1075 may transmit the signal or power to the outside of the wearable device 1000 or may receive the signal or power from the outside. The antenna module 1075 may be electrically and/or operably connected to a communication circuit (e.g., the communication circuit 240 of FIG. 2) in the wearable device 1000. In an embodiment, the antenna module 1075 may be disposed in the first temple 1004 and/or the second temple 1005. For example, the antenna module 1075 may be disposed close to one surface of the first temple 1004 and/or the second temple 1005.

In an embodiment, the speakers 1092-1 and 1092-2 may output a sound signal to the outside of the wearable device 1000. A sound output module may be referred to as a speaker. In an embodiment, the speakers 1092-1 and 1092-2 may be disposed in the first temple 1004 and/or the second temple 1005 in order to be disposed adjacent to the ear of the user wearing the wearable device 1000. For example, the wearable device 1000 may include a second speaker 1092-2 disposed adjacent to the user's left ear by being disposed in the first temple 1004, and a first speaker 1092-1 disposed adjacent to the user's right ear by being disposed in the second temple 1005.

In an embodiment, the light emitting module (not illustrated) may include at least one light emitting element. The light emitting module may emit light of a color corresponding to a specific state or may emit light through an operation corresponding to the specific state in order to visually provide information on a specific state of the wearable device 1000 to the user. For example, when the wearable device 1000 requires charging, it may repeatedly emit red light at a specific timing. In an embodiment, the light emitting module may be disposed on the first rim 1001 and/or the second rim 1002.

Referring to FIG. 10B, according to an embodiment, the wearable device 1000 may include the printed circuit board (PCB) 1090. The PCB 1090 may be included in at least one of the first temple 1004 or the second temple 1005. The PCB 1090 may include an interposer disposed between at least two sub PCBs. On the PCB 1090, one or more hardware (e.g., hardware illustrated by blocks described with reference to FIG. 2) included in the wearable device 1000 may be disposed. The wearable device 1000 may include a flexible PCB (FPCB) for interconnecting the hardware.

According to an embodiment, the wearable device 1000 may include at least one of a gyro sensor, a gravity sensor, and/or an acceleration sensor for detecting the posture of the wearable device 1000 and/or the posture of a body part (e.g., a head) of the user wearing the wearable device 1000. Each of the gravity sensor and the acceleration sensor may measure gravity acceleration, and/or acceleration based on preset 3-dimensional axes (e.g., x-axis, y-axis, and z-axis) perpendicular to each other. The gyro sensor may measure angular velocity of each of preset 3-dimensional axes (e.g., x-axis, y-axis, and z-axis). At least one of the gravity sensor, the acceleration sensor, and the gyro sensor may be referred to as an inertial measurement unit (IMU). According to an embodiment, the wearable device 1000 may identify the user's motion and/or gesture performed to execute or stop a specific function of the wearable device 1000 based on the IMU.

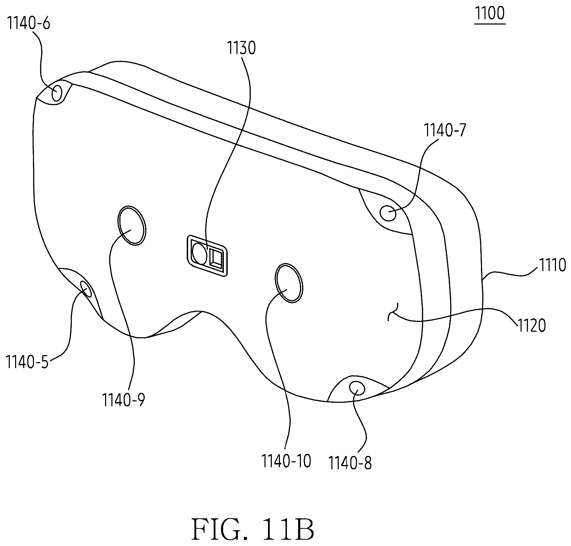

FIGS. 11A to 11B illustrate an example of an exterior of a wearable device 1100 according to an embodiment. The wearable device 101 of FIGS. 1 and 2 may include the wearable device 1100 of FIGS. 11A and 11B. According to an embodiment, an example of an exterior of a first surface 1110 of a housing of the wearable device 1100 may be illustrated in FIG. 11A, and an example of an exterior of a second surface 1120 opposite to the first surface 1110 may be illustrated in FIG. 11B.

Referring to FIG. 11A, according to an embodiment, the first surface 1110 of the wearable device 1100 may have an attachable shape on the user's body part (e.g., the user's face). Although not illustrated, the wearable device 1100 may further include a strap for being fixed on the user's body part, and/or one or more temples (e.g., the first temple 1004 and/or the second temple 1005 of FIGS. 10A to 10B). A first display 1150-1 for outputting an image to the left eye among the user's two eyes and a second display 1150-2 for outputting an image to the right eye among the user's two eyes may be disposed on the first surface 1110. The wearable device 1100 may further include rubber or silicon packing, which are formed on the first surface 1110, for preventing interference by light (e.g., ambient light) different from the light emitted from the first display 1150-1 and the second display 1150-2.

According to an embodiment, the wearable device 1100 may include cameras 1140-3 and 1140-4 for photographing and/or tracking two eyes of the user adjacent to each of the first display 1150-1 and the second display 1150-2. The cameras 1140-3 and 1140-4 may be referred to as the ET camera. According to an embodiment, the wearable device 1100 may include cameras 1140-1 and 1140-2 for photographing and/or recognizing the user's face. The cameras 1140-1 and 1140-2 may be referred to as a FT camera.

Referring to FIG. 11B, for example, a camera (e.g., cameras 1140-5, 1140-6, 1140-7, 1140-8, 1140-9, and 1140-10), and/or a sensor (e.g., the depth sensor 1130) for obtaining information associated with the external environment of the wearable device 1100 may be disposed on the second surface 1120 opposite to the first surface 1110 of FIG. 11A. For example, the cameras 1140-5, 1140-6, 1140-7, 1140-8, 1140-9, and 1140-10 may be disposed on the second surface 1120 in order to recognize an external object distinct from the wearable device 1100. For example, by using cameras 1140-9 and 1140-10, the wearable device 1100 may obtain an image and/or media to be transmitted to each of the user's two eyes. The camera 1140-9 may be disposed on the second surface 1120 of the wearable device 1100 to obtain a frame to be displayed through the second display 1150-2 corresponding to the right eye among the two eyes. The camera 1140-10 may be disposed on the second surface 1120 of the wearable device 1100 to obtain a frame to be displayed through the first display 1150-1 corresponding to the left eye among the two eyes.

According to an embodiment, the wearable device 1100 may include the depth sensor 1130 disposed on the second surface 1120 in order to identify a distance between the wearable device 1100 and the external object. By using the depth sensor 1130, the wearable device 1100 may obtain spatial information (e.g., a depth map) about at least a portion of the FoV of the user wearing the wearable device 1100.

Although not illustrated, a microphone for obtaining sound outputted from the external object may be disposed on the second surface 1120 of the wearable device 1100. The number of microphones may be one or more according to embodiments.

As described above, according to an embodiment, the wearable device 1100 may have a form factor to be worn on a head of a user. The wearable device 1100 may provide a user experience based on an augmented reality and/or a mixed reality in a state worn on the head. By using the first display 1150-1 and the second display 1150-2, the wearable device 1100 may display a portion of the virtual space 130 of FIG. 1. In case that a notification message occurs, the wearable device 1100 may select a location where the notification message is to be displayed based on a relationship between the virtual space displayed through the first display 1150-1 and the second display 1150-2, and the notification message.

In an embodiment, a method in which a wearable device displays a notification message without stopping focus of a user on a virtual space may be required. As described above, according to an embodiment, the wearable device (e.g., the wearable device 101 of FIGS. 1 to 2) may comprise a display (e.g., the display 220 of FIG. 2), memory (e.g., the memory 215 of FIG. 2) storing instructions, and a processor (e.g., the processor 210 of FIG. 2). The instructions, when executed by the processor, may cause the wearable device to display a portion of a virtual space (e.g., the virtual space 130 of FIG. 1) in the display. The instructions, when executed by the processor, may cause the wearable device to, while displaying the portion of the virtual space, based on occurrence of a notification message, identify a priority of the notification message, by using at least one of an application providing the notification message, an electronic device, or one or more applications linked with the virtual space. The instructions, when executed by the processor, may cause the wearable device to, based on identifying the notification message corresponding to a first priority, display the notification message at a location spaced apart from a central axis of the display by a first angle. The instructions, when executed by the processor, may cause the wearable device to, based on identifying the notification message corresponding to a second priority, display the notification message at a location spaced apart from the central axis by a second angle greater than the first angle. According to an embodiment, the wearable device may change a distance between the notification message and a center of a FoV, by using the priority dependent on a relationship between the notification message and the virtual space. According to an embodiment, the wearable device may dispose a first notification message associated with the virtual space displayed to the user close to the center of the FoV, and dispose a second notification message associated with another virtual space different from the virtual space displayed to the user close to a boundary line of the FoV or outside the FoV.

For example, the instructions, when executed by the processor, may cause the wearable device to identify the virtual space displayed through the display among a plurality of virtual spaces and the one or more applications. The instructions, when executed by the processor, may cause the wearable device to, based on identifying that the application providing the notification message is included in the one or more applications linked with the virtual space, select the priority of the notification message as the first priority among the first priority or the second priority.

For example, the instructions, when executed by the processor, may cause the wearable device to, based on identifying the notification message occurred in an external electronic device (e.g., the external electronic device 280 of FIG. 2) that is distinguished from the wearable device, select the priority of the notification message as the second priority.

For example, the instructions, when executed by the processor, may cause the wearable device to combine a virtual object representing the notification message at a point in the virtual space corresponding to the identified priority based on identifying the priority of the notification message among the first priority or the second priority.

For example, the wearable device may comprise a sensor (e.g., the sensor 230 of FIG. 2). The instructions, when executed by the processor, may cause the wearable device to, based on identifying a motion of the wearable device from data of the sensor, identify a direction of the central axis changed by the motion in the external space in which the wearable device is disposed. The instructions, when executed by the processor, may cause the wearable device to move the notification message corresponding to the first priority to a location spaced apart from the identified direction by the first angle.

For example, the direction of the central axis may correspond to a direction of a head of the user (e.g., the user 110 of FIG. 1) wearing the wearable device.

For example, the instructions, when executed by the processor, may cause the wearable device to, based on identifying the notification message corresponding to the first priority, display the notification message at a first area (e.g., the portion 351 of FIG. 3C) of the display rendered according to a first resolution. The instructions, when executed by the processor, may cause the wearable device to, based on identifying the notification message corresponding to the second priority, display the notification message at a second area (e.g., the portion 352 of FIG. 3C) of the display rendered according to a second resolution lower than the first resolution.

For example, the instructions, when executed by the processor, may cause the wearable device to, based on rendering the notification message corresponding to the second priority using an edge of a portion of the virtual space displayed on the display and the second angle greater than the angle between the central axis, display a visual object (e.g., the visual object 430 of FIG. 4B and/or the visual object 510 of FIGS. 5A to 5B) to guide the notification message in the edge.

For example, the instructions, when executed by the processor, may cause the wearable device to, based on one or more applications linked with a second virtual space based on an input to switch from the virtual space which is a first virtual space to the second virtual space in a state displaying the notification message, adjust the priority corresponding to the notification message. The instructions, when executed by the processor, may cause the wearable device to, using an angle corresponding to the adjusted priority among the first angle or the second angle, display the notification message in the second virtual space.

As described above, according to an embodiment, a method of a wearable device may include displaying (e.g., the operation 710 of FIG. 7) a portion of a virtual space in a display of the wearable device. The method may include, while displaying the portion of the virtual space, based on occurrence of a notification message, identifying (e.g., the operation 720 of FIG. 7) a priority of the notification message, by using at least one of an application providing the notification message, an electronic device, or one or more applications linked with the virtual space. The method may include, based on identifying the notification message corresponding to a first priority, displaying the notification message at a location spaced apart from a central axis of the display by a first angle. The method may include, based on identifying the notification message corresponding to a second priority, displaying the notification message at a location spaced apart from the central axis by a second angle greater than the first angle.

For example, the identifying may include identifying one or more applications linked with the virtual space displayed through the display among a plurality of virtual spaces. The identifying may include, based on identifying that the application providing the notification message is included in the one or more applications linked with the virtual space, selecting the priority of the notification message as the first priority among the first priority or the second priority.

For example, the identifying may include, based on identifying the notification message occurred in an external electronic device that is distinguished from the wearable device, selecting the priority of the notification message as the second priority.

For example, displaying the notification message using the first angle may include combining the virtual object representing the notification message at a point in the virtual space corresponding to the identified priority based on identifying the priority of the notification message among the first priority or the second priority.

For example, the method may include, based on identifying a motion of the wearable device from data of a sensor of the wearable device, identifying a direction of the central axis changed by the motion in an external space in which the wearable device is disposed. The method may include moving the notification message corresponding to the first priority to a location spaced apart from the identified direction by the first angle.

For example, displaying the notification message using the first angle may include, displaying the notification message at a first area of the display rendered according to a first resolution.

For example, displaying the notification message using the second angle may include, displaying the notification message at a second area of the display rendered according to a second resolution lower than the first resolution.

For example, displaying the notification message using the second angle may include, based on rendering the notification message corresponding to the second priority using an edge of a portion of the virtual space displayed on the display and the second angle greater than the angle between the central axis, displaying a visual object to guide the notification message in the edge.

For example, the method may comprise adjusting the priority corresponding to the notification message may be included, based on one or more applications linked with a second virtual space based on an input to switch from the virtual space which is a first virtual space to the second virtual space in a state displaying the notification message. The method may include, by using an angle corresponding to the adjusted priority among the first angle or the second angle, displaying the notification message in the second virtual space.

As described above, according to an embodiment, a wearable device (e.g., the wearable device 101 of FIGS. 1 to 2) may comprise a display (e.g., the display 220 of FIG. 2), memory (e.g., the memory 215 of FIG. 2) storing instructions, and a processor (e.g., the processor 210 of FIG. 2). The instructions, when executed by the processor, may cause the wearable device to, in a first state displaying a portion of a first virtual space (e.g., the first virtual space 311 of FIG. 3A, FIG. 3B, and FIG. 3C) in the display, display a notification message provided from an application corresponding to the first virtual space at a first area. The instructions, when executed by the processor, may cause the wearable device to, based on identifying an input for a switch of a virtual space, switch from the first state to a second state displaying a portion of a second virtual space (e.g., the second virtual space 312 of FIGS. 3A, 3B, and 3C) different from the first virtual space. The instructions, when executed by the processor, may cause the wearable device to, based on switching to the second state, display the notification message at a second area distinguished from the first area in the display.

For example, the instructions, when executed by the processor, may cause the wearable device to form the first area at a location spaced apart from a central axis of the display by a first angle in the portion of the first virtual space. The instructions, when executed by the processor, may cause the wearable device to form the second area at a location spaced apart from the central axis by a second angle greater than the first angle, in the portion of the first virtual space.

For example, the instructions, when executed by the processor, may cause the wearable device to, in the first state, based on a first resolution corresponding to the first area, perform rendering for the notification message. The instructions, when executed by the processor, may cause the wearable device to, in the second state, based on a second resolution, corresponding to the second area, lower than the first resolution, perform rendering for the notification message.

As described above, according to an embodiment, a method of a wearable device may include, in a first state displaying a portion of a first virtual space in a display of the wearable device, displaying (e.g., the operation 910 of FIG. 9) a notification message provided from an application corresponding to the first virtual space at a first area. The method may include, based on identifying an input for a switch of a virtual space, switching from the first state to a second state displaying a portion of a second virtual space different from the first virtual space. The method may include, based on switching to the second state, displaying (e.g., the operation 930 of FIG. 9) the notification message at a second area distinguished from the first area in the display.

For example, the method may include forming the first area at a location spaced apart from a central axis of the display by a first angle in the portion of the first virtual space. The method may include forming the second area at a location spaced apart from the central axis by a second angle greater than the first angle, in the portion of the first virtual space.

For example, displaying the notification message at the first area may include, based on a first resolution corresponding to the first area, performing rendering for the notification message.

For example, displaying the notification message at the second area may include, based on a second resolution, corresponding to the second area, lower than the first resolution, performing rendering for the notification message.

As described above, according to an embodiment, a wearable device may comprise a display, a sensor, memory comprising one or more storage media storing instructions, and at least one processor. The instructions, when executed by the at least one processor individually or collectively, may cause the wearable device to execute a first application associated with a first virtual space and a second application associated with a second virtual space. The instructions, when executed by the at least one processor individually or collectively, may cause the wearable device to, while displaying a portion of the first virtual space in the display, check occurrence of a notification message associated with the second application. The instructions, when executed by the at least one processor individually or collectively, may cause the wearable device to, based on the occurrence of the notification message, determine a location to display the notification message in another portion of the first virtual space different from the portion. The instructions, when executed by the at least one processor individually or collectively, may cause the wearable device to, based on rotation of the wearable device detected by using the sensor, display the another portion of the first virtual space including the notification message associated with the location in the display.

For example, the instructions, when executed by the at least one processor individually or collectively, may cause the wearable device to, based on another notification message provided from a plurality of applications, associated with the first virtual space, including the first application, display the another notification message at another location of the portion of the first virtual space displayed through the display.

For example, the instructions, when executed by the at least one processor individually or collectively, may cause the wearable device to, based on identifying another notification message occurred in an external electronic device distinguished from the wearable device, determine a location to display the another notification message in the another portion of the first virtual space.

For example, the instructions, when executed by the at least one processor individually or collectively, may cause the wearable device to, combine, at the determined location, a virtual object representing the notification message. A portion of the virtual object may be displayed through the portion of the first virtual space according to a combination at the location.

For example, the instructions, when executed by the at least one processor individually or collectively, may cause the wearable device to, in a state determining the location in the another portion positioned next to the portion along a horizontal axis of the display, display, based on identifying the rotation of the wearable device rotated toward the another portion along the horizontal axis, the another portion in the display.

For example, the rotation of the wearable device may correspond to a direction of a head of a user wearing the wearable device.

For example, the instructions, when executed by the at least one processor individually or collectively, may cause the wearable device to, based on identifying the another notification message associated with the first application, display the another notification message at a first area of the display rendered according to a first resolution. The instructions, when executed by the at least one processor individually or collectively, may cause the wearable device to, based on identifying the notification message associated with the second application, display the notification message at a second area of the display rendered according to a second resolution lower than the first resolution.

For example, the instructions, when executed by the at least one processor individually or collectively, may cause the wearable device to, based on the location determined in the another portion, display a visual object to guide the notification message associated with the location at an edge of the display.

For example, the instructions, when executed by the at least one processor individually or collectively, may cause the wearable device to, in a state displaying the notification message, display, based on an input to switch from the virtual space which is a first virtual space to a second virtual space, a portion of the second virtual space in the display. The instructions, when executed by the at least one processor individually or collectively, may cause the wearable device to, display, in the portion of the second virtual space, the notification message.

As described above, in an embodiment, a method of a wearable device may be provided. The method may comprise executing a first application associated with a first virtual space and a second application associated with a second virtual space. The method may comprise, while displaying a portion of the first virtual space in the display, checking occurrence of a notification message associated with the second application. The method may comprise, based on the occurrence of the notification message, determining a location to display the notification message in another portion of the first virtual space different from the portion. The method may comprise, based on rotation of the wearable device detected by using the sensor, displaying the another portion of the first virtual space including the notification message associated with the location in the display.

For example, the method may comprise, based on another notification message provided from a plurality of applications, associated with the first virtual space, including the first application, displaying the another notification message at another location of the portion of the first virtual space displayed through the display.

For example, the method may comprise, based on identifying the another notification message occurred in an external electronic device distinguished from the wearable device, determining a location to display the another notification message in the another portion of the first virtual space.

For example, the determining may comprise combining, at the determined location, the virtual object representing the notification message. A portion of the virtual object may be displayed through the portion of the first virtual space according to a combination at the location.

For example, the displaying the another portion may comprise, in a state determining the location in the another portion positioned next to the portion along a horizontal axis of the display, displaying, based on identifying the rotation of the wearable device rotated toward the another portion along the horizontal axis, the another portion in the display.

For example, the rotation of the wearable device may correspond to a direction of a head of a user wearing the wearable device.

The device described above may be implemented as a hardware component, a software component, and/or a combination of a hardware component and a software component. For example, the devices and components described in the embodiments may be implemented by using one or more general purpose computers or special purpose computers, such as a processor, controller, arithmetic logic unit (ALU), digital signal processor, microcomputer, field programmable gate array (FPGA), programmable logic unit (PLU), microprocessor, or any other device capable of executing and responding to instructions. The processing device may perform an operating system (OS) and one or more software applications executed on the operating system. In addition, the processing device may access, store, manipulate, process, and generate data in response to the execution of the software. For convenience of understanding, there is a case that one processing device is described as being used, but a person who has ordinary knowledge in the relevant technical field may see that the processing device may include a plurality of processing elements and/or a plurality of types of processing elements. For example, the processing device may include a plurality of processors or one processor and one controller. In addition, another processing configuration, such as a parallel processor, is also possible.

The software may include a computer program, code, instruction, or a combination of one or more thereof, and may configure the processing device to operate as desired or may command the processing device independently or collectively. The software and/or data may be embodied in any type of machine, component, physical device, computer storage medium, or device, to be interpreted by the processing device or to provide commands or data to the processing device. The software may be distributed on network-connected computer systems and stored or executed in a distributed manner. The software and data may be stored in one or more computer-readable recording medium.

The method according to the embodiment may be implemented in the form of a program command that may be performed through various computer means and recorded on a computer-readable medium. In this case, the medium may continuously store a program executable by the computer or may temporarily store the program for execution or download. In addition, the medium may be various recording means or storage means in the form of a single or a combination of several hardware, but is not limited to a medium directly connected to a certain computer system, and may exist distributed on the network. Examples of media may include a magnetic medium such as a hard disk, floppy disk, and magnetic tape, optical recording medium such as a CD-ROM and DVD, magneto-optical medium, such as a floptical disk, and those configured to store program instructions, including ROM, RAM, flash memory, and the like. In addition, examples of other media may include recording media or storage media managed by app stores that distribute applications, sites that supply or distribute various software, servers, and the like.

As described above, although the embodiments have been described with limited examples and drawings, a person who has ordinary knowledge in the relevant technical field is capable of various modifications and transform from the above description. For example, even if the described technologies are performed in a different order from the described method, and/or the components of the described system, structure, device, circuit, and the like are coupled or combined in a different form from the described method, or replaced or substituted by other components or equivalents, appropriate a result may be achieved.

Therefore, other implementations, other embodiments, and those equivalent to the scope of the claims are in the scope of the claims described later.

## Claims

1. A wearable device comprising:
a display;
a sensor;
memory comprising one or more storage media storing instructions; and
at least one processor, wherein the instructions, when executed by the at least one processor individually or collectively, cause the wearable device to:
execute a first application associated with a first virtual space and a second application associated with a second virtual space;
while displaying a portion of the first virtual space in the display, check occurrence of a notification message associated with the second application;
based on the occurrence of the notification message, determine a location to display the notification message in another portion of the first virtual space different from the portion; and
based on rotation of the wearable device detected by using the sensor, display the another portion of the first virtual space including the notification message associated with the location in the display.

2. The wearable device of claim 1, wherein the instructions, when executed by the at least one processor individually or collectively, cause the wearable device to:
based on another notification message provided from a plurality of applications, associated with the first virtual space, including the first application, display the another notification message at another location of the portion of the first virtual space displayed through the display.

3. The wearable device of claim 1, wherein the instructions, when executed by the at least one processor individually or collectively, cause the wearable device to:
based on identifying another notification message occurred in an external electronic device distinguished from the wearable device, determine a location to display the another notification message in the another portion of the first virtual space.

4. The wearable device of claim 1, wherein the instructions, when executed by the at least one processor individually or collectively, cause the wearable device to:
combine, at the determined location, a virtual object representing the notification message,
wherein a portion of the virtual object is displayed through the portion of the first virtual space according to a combination at the location.

5. The wearable device of claim 1, wherein the instructions, when executed by the at least one processor individually or collectively, cause the wearable device to:
in a state determining the location in the another portion positioned next to the portion along a horizontal axis of the display, display, based on identifying the rotation of the wearable device rotated toward the another portion along the horizontal axis, the another portion in the display.

6. The wearable device of claim 1, wherein the rotation of the wearable device corresponds to a direction of a head of a user wearing the wearable device.

7. The wearable device of claim 1, wherein the instructions, when executed by the at least one processor individually or collectively, cause the wearable device to:
based on identifying the another notification message associated with the first application, display the another notification message at a first area of the display rendered according to a first resolution; and
based on identifying the notification message associated with the second application, display the notification message at a second area of the display rendered according to a second resolution lower than the first resolution.

8. The wearable device of claim 1, wherein the instructions, when executed by the at least one processor individually or collectively, cause the wearable device to:
based on the location determined in the another portion, display a visual object to guide the notification message associated with the location at an edge of the display.

9. The wearable device of claim 1, wherein the instructions, when executed by the at least one processor individually or collectively, cause the wearable device to:
in a state displaying the notification message, display, based on an input to switch from the virtual space which is a first virtual space to a second virtual space, a portion of the second virtual space in the display;
display, in the portion of the second virtual space, the notification message.

10. A method of a wearable device, comprising:
executing a first application associated with a first virtual space and a second application associated with a second virtual space;
while displaying a portion of the first virtual space in the display, checking occurrence of a notification message associated with the second application;
based on the occurrence of the notification message, determining a location to display the notification message in another portion of the first virtual space different from the portion; and
based on rotation of the wearable device detected by using the sensor, displaying the another portion of the first virtual space including the notification message associated with the location in the display.

11. The method of claim 10, further comprises,
based on another notification message provided from a plurality of applications, associated with the first virtual space, including the first application, displaying the another notification message at another location of the portion of the first virtual space displayed through the display.

12. The method of claim 10, further comprises,
based on identifying the another notification message occurred in an external electronic device distinguished from the wearable device, determining a location to display the another notification message in the another portion of the first virtual space.

13. The method of claim 10, wherein the determining comprises,
combining, at the determined location, the virtual object representing the notification message,
wherein a portion of the virtual object is displayed through the portion of the first virtual space according to a combination at the location.

14. The method of claim 10, wherein the displaying the another portion comprises,
in a state determining the location in the another portion positioned next to the portion along a horizontal axis of the display, displaying, based on identifying the rotation of the wearable device rotated toward the another portion along the horizontal axis, the another portion in the display.

15. The method of claim 10, wherein the rotation of the wearable device corresponds to a direction of a head of a user wearing the wearable device.
